# EUROPEAN PATENT APPLICATION

(11) **EP 4 475 611 A1**
(43) Date of publication of application: **11.12.2024**
(21) Application number: 23766091.5
(22) Date of filing: 09.03.2023
(51) Int. Cl.: H04W 72/04

(54) **COMMUNICATION METHOD AND APPARATUS**

(30) Priority: 11.03.2022 CN 202210237422
(71) Applicant: Huawei Technologies Co., Ltd., Shenzhen, Guangdong 518129 (CN)
(72) Inventor: YANG, Pei, Shenzhen, Guangdong 518129 (CN); LI, Tie, Shenzhen, Guangdong 518129 (CN); YU, Zheng, Shenzhen, Guangdong 518129 (CN)
(74) Representative: Gill Jennings & Every LLP
(86) International application number: PCT/CN2023/080518
(87) International publication number: WO 2023/169514

(57) **Abstract**

This application provides a communication method and apparatus. The method includes: receiving first information; determining N modes from M modes based on the first information, where N is an integer greater than 0, M is an integer greater than or equal to N, and the M modes include one or more of a first mode, a second mode, and a third mode; and sending a transport block in one of the N modes. A transmission mode of at least one antenna panel on a terminal device is accurately indicated by indication information. This resolves, without increasing bit overheads, a problem of indicating a transmission mode of an antenna panel on the terminal device in a multi-antenna panel scenario.

## Description

This application claims priority to Chinese Patent Application No. 202210237422.5, filed with the China National Intellectual Property Administration on March 11, 2022, and entitled "COMMUNICATION METHOD AND APPARATUS ", which is incorporated herein by reference in its entirety.

### TECHNICAL FIELD

This application relates to the communication field, and more specifically, to a communication method and apparatus.

### BACKGROUND

In 5G NR (new radio, NR), to avoid attenuation generated in a process in which a signal propagates in space, a beamforming (beamforming, BF) technology is usually used to obtain a good directional gain, increase directional power, improve a signal to interference plus noise ratio (signal to interference plus noise ratio, SINR), and further improve comprehensive performance of a system. In consideration of a balance between costs and performance, a hybrid beamforming (hybrid beamforming, HBF) technology including digital beamforming and analog beamforming is currently used. An antenna panel (antenna panel) is a core component, that is, beams are received or sent via the antenna panel.

Currently, discussion about the antenna panel is based on an uplink transmission process for fast selection and switching of a multi-antenna panel, and a definition of the antenna panel and how to reflect the antenna panel in a protocol are specifically discussed, but a problem that antenna panels on a terminal device simultaneously send transport blocks is not involved.

### SUMMARY

This application provides a communication method and apparatus, to effectively resolve a problem of indicating a transmission mode of a terminal device in a multi-antenna panel scenario.

According to a first aspect, a communication method is provided. The communication method may be performed by a terminal device, or may be performed by a chip or a circuit disposed in the terminal device. This is not limited in this application.

The communication method includes: receiving first information, where the first information indicates one mode or two modes, the one mode is one of a first mode, a second mode, or a third mode, and the two modes are two of the first mode, the second mode, or the third mode; the first mode is sending a transport block via one antenna panel; the second mode is sending same transport blocks at at least two moments via at least one antenna panel, and the transport block is sent at each of the at least two moments via one antenna panel; and the third mode is sending a same transport block simultaneously via at least two antenna panels, and different antenna panels send different parts of the transport block, or the third mode is sending one transport block simultaneously via each of at least two antenna panels; and sending a transport block in one of the one mode or two modes indicated by the first information.

Therefore, in this application, in the multi-antenna panel scenario, the terminal device receives the first information, to implement indicating a transmission mode of at least one antenna panel on the terminal device. That is, the first information can indicate the one mode or two modes of the first mode, the second mode, or the third mode. This application is also applied to a multi-transmission reception point scenario. When the terminal device sends transport blocks to one or more transmission reception points via a multi-antenna panel, the first information indicates a transmission mode of the antenna panel on the terminal device.

With reference to the first aspect, in some implementations of the first aspect, when a value of the first information is a first value, the first information indicates the two modes, and the two modes are the first mode and the second mode, or when a value of the first information is a second value, the first information indicates the one mode, and the mode is the third mode; or when a value of the first information is a first value, the first information indicates the two modes, and the two modes are the first mode and the second mode, or when a value of the first information is a second value, the first information indicates the two modes, and the two modes are the first mode and the third mode; or when a value of the first information is a first value, the first information indicates the two modes, and the two modes are the first mode and the third mode, or when a value of the first information is a second value, the first information indicates the one mode, and the mode is the second mode.

Therefore, in this application, the terminal device can receive the first information whose value is the first value and the second value to indicate the first mode and the second mode, and the third mode respectively; or the terminal device can receive the first information whose value is the first value and the second value to indicate the first mode and the second mode, and the first mode and the third mode respectively; or the terminal device can receive the first information whose value is the first value and the second value to indicate the first mode and the third mode, and the second mode respectively.

With reference to the first aspect, in some implementations of the first aspect, when the first information indicates the two modes, the method further includes: receiving, by the terminal device, second information, where the second information indicates one of the two modes; and the sending a transport block in one of the one mode or two modes indicated by the first information includes: sending the transport block based on the first information and the second information.

Therefore, in this application, when the first information indicates the two modes of the first mode, the second mode, and the third mode, the terminal device can determine the specific mode from the two modes based on the second information. This accurately indicates the transmission mode of the multi-antenna panel on the terminal device. In addition, when the second information is at least one bit in downlink control information DCI, dynamic switching between the first mode and the second mode or between the first mode and the third mode can be implemented, thereby reducing a network delay.

With reference to the first aspect, in some implementations of the first aspect, the second information is at least one bit in radio resource control RRC, a media access control control element MAC CE, or downlink control information DCI.

Therefore, in this application, when the second information is two bits in the RRC, the MAC CE, or the DCI, the transmission mode of the multi-antenna panel at a terminal device side can be indicated without increasing bit overheads.

With reference to the first aspect, in some implementations of the first aspect, the first information is one bit in RRC, a MAC CE, or DCI.

Therefore, in this application, one bit in the RRC, the MAC CE, or the DCI is introduced to indicate one mode or two modes in a plurality of transmission modes. When the one bit in the RRC, the MAC CE, or the DCI indicates the two transmission modes, two bits configured in the DCI may indicate one of the two modes. This reduces impact of standardization.

With reference to the first aspect, in some implementations of the first aspect, the first mode, the second mode, or the third mode includes at least two sub-modes, parameter sets of any two sub-modes in a same mode are different, and the parameter set includes at least one of a channel set, a channel group set, a time domain resource set, a frequency domain resource set, or a space domain resource set; and when the first information indicates the one mode, the first information further indicates a sub-mode in the mode.

Therefore, in this application, when the first information indicates the one mode, the first information further indicates the sub-mode in the mode, so that the terminal device receives the first information, to implement accurately indicating the sub-mode corresponding to the mode.

With reference to the first aspect, in some implementations of the first aspect, the first information is at least two bits in RRC, a MAC CE, or DCI.

Therefore, in this application, when the first information is two bits configured in the DCI, values of the two bits configured in the DCI may indicate one of a plurality of transmission modes, and the values of the two bits configured in the DCI may further indicate a sub-mode corresponding to the mode. This resolves, without increasing bit overheads, a problem of indicating the sub-mode corresponding to the transmission mode of the antenna panel at a terminal device side.

With reference to the first aspect, in some implementations of the first aspect, the first information indicates the one mode; and when a value of the first information belongs to a first value set, the first information indicates that the mode is the first mode, and the first value set includes at least one value; or when a value of the first information belongs to a second value set, the first information indicates that the mode is the second mode, and the second value set includes at least one value; or when a value of the first information belongs to a third value set, the first information indicates that the mode is the third mode, and the third value set includes at least one value.

With reference to the first aspect, in some implementations of the first aspect, the first information indicates the one mode or two modes from a plurality of modes, where the plurality of modes include one or more of the first mode, the second mode, or the third mode; and the method may further include: receiving third information, where the third information indicates whether the plurality of modes include the third mode.

With reference to the first aspect, in some implementations of the first aspect, the third information may be RRC, a MAC CE, or DCI.

With reference to the first aspect, in some implementations of the first aspect, the third information includes a first field; and when a value of the first field is a third value, the third information indicates that the plurality of modes include the third mode; or when a value of the first field is a fourth value, the third information indicates that the plurality of modes do not include the third mode. For example, the third value may be 0, and the fourth value is 1; or the third value is 1, and the fourth value is 0.

With reference to the first aspect, in some implementations of the first aspect, whether the plurality of modes include the third mode may also be determined based on whether the third information includes a first field. When the third information includes the first field, the plurality of modes include the third mode; or when the third information does not include the first field, the plurality of modes do not include the third mode. Alternatively, when the third information includes the first field, the plurality of modes do not include the third mode; or when the third information does not include the first field, the plurality of modes include the third mode.

According to a second aspect, a communication method is provided. The communication method may be performed by a network device, or may be performed by a chip or a circuit disposed in the network device. This is not limited in this application.

The method includes: determining first information, where the first information indicates one mode or two modes, the one mode is one of a first mode, a second mode, or a third mode, and the two modes are two of the first mode, the second mode, or the third mode; the first mode is sending a transport block via one antenna panel; the second mode is sending same transport blocks at at least two moments via at least one antenna panel, and the transport block is sent at each of the at least two moments via one antenna panel; and the third mode is sending a same transport block simultaneously via at least two antenna panels, and different antenna panels send different parts of the transport block, or the third mode is sending one transport block simultaneously via each of at least two antenna panels; and sending the first information.

Therefore, in this application, in the multi-antenna panel scenario, the network device can send the first information to the terminal device, to implement indicating a transmission mode of a multi-antenna panel on the terminal device. That is, the first information can indicate the one mode or two modes of the first mode, the second mode, or the third mode. This application is also applied to a multi-transmission reception point scenario. When the terminal device sends transport blocks to one or more transmission reception points via a multi-antenna panel, the first information sent by the network device is received and indicates a transmission mode of the antenna panel on the terminal device.

With reference to the second aspect, in some implementations of the second aspect, when a value of the first information is a first value, the first information indicates the two modes, and the two modes are the second mode and the third mode, or when a value of the first information is a second value, the first information indicates the one mode, and the mode is the first mode; or when a value of the first information is a first value, the first information indicates the two modes, and the two modes are the second mode and the third mode, or when a value of the first information is a second value, the first information indicates the two modes, and the two modes are the first mode and the third mode; or when a value of the first information is a first value, the first information indicates the two modes, and the two modes are the first mode and the third mode, or when a value of the first information is a second value, the first information indicates the one mode, and the mode is the second mode.

Therefore, in this application, the network device can send the first information whose value is the first value and the second value to indicate the first mode and the second mode, and the third mode respectively of the antenna panel on the terminal device, or indicate the first mode and the second mode, and the first mode and the third mode respectively of the antenna panel on the terminal device, or indicate the second mode and the first mode, and the third mode respectively of the antenna panel on the terminal device.

With reference to the second aspect, in some implementations of the second aspect, when the first information indicates the two modes, the method further includes: sending second information, where the second information indicates one of the two modes.

Therefore, in this application, when the first information indicates the two modes of the first mode, the second mode, and the third mode, the network device can send the second information, so that the terminal device determines the specific mode from the two modes. This implements accurately indicating the transmission mode of the antenna panel on the terminal device. In addition, when the second information is at least one bit in downlink control information DCI, dynamic switching between the first mode and the second mode or between the first mode and the third mode can be implemented, thereby reducing a network delay.

With reference to the second aspect, in some implementations of the second aspect, the second information is at least one bit in radio resource control RRC, a media access control control element MAC CE, or downlink control information DCI.

Therefore, in this application, when the second information is two bits in the RRC, the MAC CE, or the DCI, the transmission mode of the multi-antenna panel at a terminal device side can be indicated without increasing bit overheads.

With reference to the second aspect, in some implementations of the second aspect, the first information is one bit in RRC, a MAC CE, or DCI.

Therefore, in this application, one bit in the RRC, the MAC CE, or the DCI is introduced to indicate one mode or two modes in a plurality of transmission modes. When the one bit in the RRC, the MAC CE, or the DCI indicates the two transmission modes, two bits configured in the DCI may indicate one of the two modes. This reduces impact of standardization.

With reference to the second aspect, in some implementations of the second aspect, the first mode, the second mode, or the third mode includes at least two sub-modes, parameter sets of any two sub-modes in a same mode are different, and the parameter set includes at least one of a channel set, a channel group set, a time domain resource set, a frequency domain resource set, or a space domain resource set; and when the first information indicates the one mode, the first information further indicates a sub-mode in the mode.

Therefore, in this application, when the first information indicates the one mode, the first information further indicates the sub-mode in the mode, so that the network device can send the first information, to implement accurately indicating the sub-mode corresponding to the mode.

With reference to the second aspect, in some implementations of the second aspect, the first information is at least two bits in RRC, a MAC CE, or DCI.

Therefore, in this application, when the first information is two bits configured in the DCI, values of the two bits configured in the DCI may indicate one of a plurality of transmission modes, and the values of the two bits configured in the DCI may further indicate a sub-mode corresponding to the mode. This resolves, without increasing bit overheads, a problem of indicating the sub-modes corresponding to the transmission mode of the multi-antenna panel at a terminal device side.

With reference to the second aspect, in some implementations of the second aspect, the first information indicates the one mode; and when a value of the first information belongs to a first value set, the first information indicates that the mode is the first mode, and the first value set includes at least one value; or when a value of the first information belongs to a second value set, the first information indicates that the mode is the second mode, and the second value set includes at least one value; or when a value of the first information belongs to a third value set, the first information indicates that the mode is the third mode, and the third value set includes at least one value.

With reference to the second aspect, in some implementations of the second aspect, the first information indicates the one mode or two modes from a plurality of modes, where the plurality of modes include one or more of the first mode, the second mode, or the third mode; and the method may further include: sending third information, where the third information indicates whether the plurality of modes include the third mode.

With reference to the second aspect, in some implementations of the second aspect, the third information may be RRC, a MAC CE, or DCI.

With reference to the second aspect, in some implementations of the second aspect, the third information includes a first field; and when a value of the first field is a third value, the third information indicates that the plurality of modes include the third mode; or when a value of the first field is a fourth value, the third information indicates that the plurality of modes do not include the third mode. For example, the third value may be 0, and the fourth value is 1; or the third value is 1, and the fourth value is 0.

With reference to the second aspect, in some implementations of the second aspect, whether the plurality of modes include the third mode may also be indicated based on whether the third information includes a first field. When the third information includes the first field, the plurality of modes include the third mode; or when the third information does not include the first field, the plurality of modes do not include the third mode. Alternatively, when the third information includes the first field, the plurality of modes do not include the third mode; or when the third information does not include the first field, the plurality of modes include the third mode.

According to a third aspect, a communication method is provided. The communication method may be performed by a terminal device, or may be performed by a chip or a circuit disposed in the terminal device. This is not limited in this application.

The communication method includes: receiving first information, where the first information is used to determine a target mode from at least two modes, and the at least two modes include at least two of a first mode, a second mode, and a third mode; the first mode is sending a transport block via one antenna panel; the second mode is sending same transport blocks at at least two moments via at least one antenna panel, and the transport block is sent at each of the at least two moments via one antenna panel; and the third mode is sending a same transport block simultaneously via at least two antenna panels, and different antenna panels send different parts of the transport block, or the third mode is sending one transport block simultaneously via each of at least two antenna panels; and sending a transport block in the target mode.

Therefore, in this application, in the multi-antenna panel scenario, the terminal device can receive the first information and determine the target transmission mode. This application is also applied to a multi-transmission reception point scenario. When the terminal device sends transport blocks to one or more transmission reception points via antenna panels, the terminal device receives the first information and determines the target mode.

With reference to the third aspect, in some implementations of the third aspect, if the at least two modes are two modes, the two modes are the first mode and the second mode, or the two modes are the first mode and the third mode, or the two modes are the second mode and the third mode; and the first information indicates one of the two modes, where the mode is the target mode. With reference to the third aspect, in some implementations of the third aspect, if the at least two modes are three modes, the first information indicates one mode or two modes of the three modes; and when the first information indicates the two modes, the method further includes: receiving second information, where the second information indicates one of the two modes, and the mode is the target mode.

Therefore, in this application, when the at least two modes are the three modes, the terminal device can receive the second information and determine the target mode.

With reference to the third aspect, in some implementations of the third aspect, when a value of the first information is a first value, the first information indicates the two modes, and the two modes are the first mode and the second mode, or when a value of the first information is a second value, the first information indicates the one mode, and the mode is the third mode; or when a value of the first information is a first value, the first information indicates the two modes, and the two modes are the first mode and the second mode, or when a value of the first information is a second value, the first information indicates the two modes, and the two modes are the first mode and the third mode; or when a value of the first information is a first value, the first information indicates the two modes, and the two modes are the first mode and the third mode, or when a value of the first information is a second value, the first information indicates the one mode, and the mode is the second mode.

With reference to the third aspect, in some implementations of the third aspect, the first information is one bit in radio resource control RRC, a media access control control element MAC CE, or downlink control information DCI.

With reference to the third aspect, in some implementations of the third aspect, one bit of the first information indicates one mode or two modes.

With reference to the third aspect, in some implementations of the third aspect, the first information is at least one bit in radio resource control RRC, a media access control control element MAC CE, or downlink control information DCI.

With reference to the third aspect, in some implementations of the third aspect, at least one bit of the first information indicates one mode, and the at least one bit may be two bits.

With reference to the third aspect, in some implementations of the first aspect, when a value of the first information belongs to a first value set, the first information indicates that the target mode is the first mode, and the first value set includes at least one value; or when a value of the first information belongs to a second value set, the first information indicates that the target mode is the second mode, and the second value set includes at least one value; or when a value of the first information belongs to a third value set, the first information indicates that the target mode is the third mode, and the third value set includes at least one value.

With reference to the third aspect, in some implementations of the third aspect, the method may further include: receiving third information, where the third information indicates whether the at least two modes include the third mode.

With reference to the third aspect, in some implementations of the third aspect, the third information may be RRC, a MAC CE, or DCI.

With reference to the third aspect, in some implementations of the third aspect, the third information includes a first field; and when a value of the first field is a third value, the third information indicates that the at least two modes include the third mode; or when a value of the first field is a fourth value, the third information indicates that the at least two modes do not include the third mode. For example, the third value may be 0, and the fourth value is 1; or the third value is 1, and the fourth value is 0.

With reference to the third aspect, in some implementations of the third aspect, whether the at least two modes include the third mode may also be determined based on whether the third information includes a first field. When the third information includes the first field, the at least two modes include the third mode; or when the third information does not include the first field, the at least two modes do not include the third mode. Alternatively, when the third information includes the first field, the at least two modes do not include the third mode; or when the third information does not include the first field, the at least two modes include the third mode.

According to a fourth aspect, a communication method is provided. The communication method may be performed by a network device, or may be performed by a chip or a circuit disposed in the network device. This is not limited in this application.

The method includes: sending first information, where the first information is used to determine a target mode from at least two modes, the at least two modes include a third mode, or the at least two modes include at least two of a first mode, a second mode, and a third mode; the first mode is sending a transport block via one antenna panel; the second mode is sending same transport blocks at at least two moments via at least one antenna panel, and the transport block is sent at each of the at least two moments via one antenna panel; and the third mode is sending a same transport block simultaneously via at least two antenna panels, and different antenna panels send different parts of the transport block, or the third mode is sending one transport block simultaneously via each of at least two antenna panels; and receiving a transport block in one mode of the target mode.

Therefore, in this application, in the multi-antenna panel scenario, the network device can determine the target mode by using the first information. This application is also applied to a multi-transmission reception point scenario. When the terminal device sends transport blocks to one or more transmission reception points via antenna panels, third information sent by the network device is received and indicates a transmission mode of the at least two transmission modes.

With reference to the fourth aspect, in some implementations of the fourth aspect, if the at least two modes are two modes, the two modes are the first mode and the second mode, or the two modes are the first mode and the third mode, or the two modes are the second mode and the fourth mode; and the first information indicates one mode of the two modes, where the mode is the target mode. With reference to the fourth aspect, in some implementations of the fourth aspect, if the at least two modes are three modes, the first information indicates one mode or two modes of the three modes; and when the first information indicates the two modes, the method further includes: sending second information, where the second information indicates one mode of the two modes, and the mode is the target mode.

Therefore, in this application, when the at least two modes are the three modes, the network device can send the second information, so that the terminal device determines the target mode.

With reference to the fourth aspect, in some implementations of the fourth aspect, when a value of the first information is a first value, the first information indicates the two modes, and the two modes are the first mode and the second mode, or when a value of the first information is a second value, the first information indicates the one mode, and the mode is the third mode; or when a value of the first information is a first value, the first information indicates the two modes, and the two modes are the first mode and the second mode, or when a value of the first information is a second value, the first information indicates the two modes, and the two modes are the first mode and the third mode; or when a value of the first information is a first value, the first information indicates the two modes, and the two modes are the first mode and the third mode, or when a value of the first information is a second value, the first information indicates the one mode, and the mode is the second mode.

With reference to the fourth aspect, in some implementations of the fourth aspect, the first information is one bit in radio resource control RRC, a media access control control element MAC CE, or downlink control information DCI.

With reference to the fourth aspect, in some implementations of the fourth aspect, one bit of the first information indicates one mode or two modes.

With reference to the fourth aspect, in some implementations of the fourth aspect, the first information is at least one bit in radio resource control RRC, a media access control control element MAC CE, or downlink control information DCI.

With reference to the fourth aspect, in some implementations of the fourth aspect, at least one bit of the first information indicates one mode, and the at least one bit may be two bits.

With reference to the fourth aspect, in some implementations of the first aspect, when a value of the first information belongs to a first value set, the first information indicates that the target mode is the first mode, and the first value set includes at least one value; or when a value of the first information belongs to a second value set, the first information indicates that the target mode is the second mode, and the second value set includes at least one value; or when a value of the first information belongs to a third value set, the first information indicates that the target mode is the third mode, and the third value set includes at least one value.

With reference to the fourth aspect, in some implementations of the fourth aspect, the method may further include: sending third information, where the third information indicates whether the at least two modes include the third mode.

With reference to the fourth aspect, in some implementations of the fourth aspect, the third information may be RRC, a MAC CE, or DCI.

With reference to the fourth aspect, in some implementations of the fourth aspect, the third information includes a first field; and when a value of the first field is a third value, the third information indicates that the at least two modes include the third mode; or when a value of the first field is a fourth value, the third information indicates that the at least two modes do not include the third mode. For example, the third value may be 0, and the fourth value is 1; or the third value is 1, and the fourth value is 0.

With reference to the fourth aspect, in some implementations of the fourth aspect, whether the at least two modes include the third mode may also be indicated based on whether the third information includes a first field. When the third information includes the first field, the at least two modes include the third mode; or when the third information does not include the first field, the at least two modes do not include the third mode. Alternatively, when the third information includes the first field, the at least two modes do not include the third mode; or when the third information does not include the first field, the at least two modes include the third mode.

According to a fifth aspect, a communication method is provided. The communication method may be performed by a terminal device, or may be performed by a chip or a circuit disposed in the terminal device. This is not limited in this application.

The communication method includes: receiving first information, and determining N modes from M modes based on the first information, where N is an integer greater than 0, and M is an integer greater than or equal to N; the M modes include one or more of a first mode, a second mode, and a third mode; the first mode is sending a transport block via one antenna panel; the second mode is sending same transport blocks at at least two moments via at least one antenna panel, and the transport block is sent at each of the at least two moments via one antenna panel; and the third mode is sending a same transport block simultaneously via at least two antenna panels, and different antenna panels send different parts of the transport block, or the third mode is sending one transport block simultaneously via each of at least two antenna panels; and sending a transport block in one of the N modes.

Therefore, in this application, in the multi-antenna panel scenario, the terminal device receives the first information, to implement indicating a transmission mode of at least one antenna panel on the terminal device. That is, the first information can indicate the one or more of the first mode, the second mode, and the third mode. This application is also applied to a multi-transmission reception point scenario. When the terminal device sends transport blocks to one or more transmission reception points via a multi-antenna panel, the first information indicates a transmission mode of the antenna panel on the terminal device.

With reference to the fifth aspect, in some implementations of the fifth aspect, when M is 2, the M modes are two modes of the first mode, the second mode, and the third mode, N may be 1, and the first information is used to determine one mode of the two modes.

Therefore, in this application, when M is 2, in the multi-antenna panel scenario, the terminal device can receive the first information, to implement indicating the transmission mode of the antenna panel on the terminal device. This application is also applied to the multi-transmission reception point scenario. When the terminal device sends the transport blocks to the one or more transmission reception points via antenna panels, the first information is received and indicates one mode of the antenna panel on the terminal device.

With reference to the fifth aspect, in some implementations of the fifth aspect, when M is 2, the first information is at least one bit in radio resource control RRC, a media access control control element MAC CE, or downlink control information DCI.

With reference to the fifth aspect, in some implementations of the fifth aspect, when M is 3, a value of N may be 1 or 2. When N is 1, the first information indicates one mode from three modes, and the three modes include the first mode, the second mode, and the third mode. In this case, the first information may be one bit or two bits. Alternatively, when N is 2, the first information indicates two modes from three modes, and the terminal device may send the transport block in one of the two modes; or when N is 2, the first information indicates two modes from three modes. In this case, the method further includes: receiving second information, where the second information specifically indicates one of the two modes as a target mode.

With reference to the fifth aspect, in some implementations of the fifth aspect, when a value of M is 3, a value of N is 1 or 2; and when a value of the first information is a first value, the first information indicates the two modes, and the two modes are the first mode and the second mode, or when a value of the first information is a second value, the first information indicates the one mode, and the mode is the third mode; or when a value of the first information is a first value, the first information indicates the two modes, and the two modes are the first mode and the second mode, or when a value of the first information is a second value, the first information indicates the two modes, and the two modes are the first mode and the third mode; or when a value of the first information is a first value, the first information indicates the two modes, and the two modes are the first mode and the third mode, or when a value of the first information is a second value, the first information indicates the one mode, and the mode is the second mode.

With reference to the fifth aspect, in some implementations of the fifth aspect, the first information is one bit in radio resource control RRC, a media access control control element MAC CE, or downlink control information DCI.

With reference to the fifth aspect, in some implementations of the fifth aspect, one bit of the first information indicates one mode or two modes.

With reference to the fifth aspect, in some implementations of the fifth aspect, the first information is at least one bit in radio resource control RRC, a media access control control element MAC CE, or downlink control information DCI.

With reference to the fifth aspect, in some implementations of the fifth aspect, at least one bit of the first information indicates one mode, and the at least one bit may be two bits.

With reference to the fifth aspect, in some implementations of the fifth aspect, one mode is determined from the M modes based on the first information; and when a value of the first information belongs to a first value set, the first information indicates that the mode is the first mode, and the first value set includes at least one value; or when a value of the first information belongs to a second value set, the first information indicates that the mode is the second mode, and the second value set includes at least one value; or when a value of the first information belongs to a third value set, the first information indicates that the mode is the third mode, and the third value set includes at least one value.

With reference to the fifth aspect, in some implementations of the fourth aspect, the method may further include: receiving third information, where the third information indicates whether the M modes include the third mode.

With reference to the fifth aspect, in some implementations of the fifth aspect, the third information may be RRC, a MAC CE, or DCI.

With reference to the fifth aspect, in some implementations of the fifth aspect, the third information includes a first field; and when a value of the first field is a third value, the third information indicates that the M modes include the third mode; or when a value of the first field is a fourth value, the third information indicates that the M modes do not include the third mode. For example, the third value may be 0, and the fourth value is 1; or the third value is 1, and the fourth value is 0.

With reference to the fifth aspect, in some implementations of the fifth aspect, whether the M modes include the third mode may also be indicated based on whether the third information includes a first field. When the third information includes the first field, the M modes include the third mode, or when the third information does not include the first field, the M modes do not include the third mode. Alternatively, when the third information includes the first field, the M modes do not include the third mode, or when the third information does not include the first field, the M modes include the third mode.

According to a sixth aspect, a communication method is provided. The communication method may be performed by a network device, or may be performed by a chip or a circuit disposed in the network device. This is not limited in this application.

The method includes: sending first information, and determining N modes from M modes based on the first information, where N is an integer greater than 0, and M is an integer greater than or equal to N; the M modes include one or more of a first mode, a second mode, and a third mode; the first mode is sending a transport block via one antenna panel; the second mode is sending same transport blocks at at least two moments via at least one antenna panel, and the transport block is sent at each of the at least two moments via one antenna panel; and the third mode is sending a same transport block simultaneously via at least two antenna panels, and different antenna panels send different parts of the transport block, or the third mode is sending one transport block simultaneously via each of at least two antenna panels; and receiving a transport block in one of the N modes.

Therefore, in this application, in the multi-antenna panel scenario, the network device sends the first information to the terminal device, to implement indicating a transmission mode of at least one antenna panel on the terminal device. That is, the first information can indicate the one or more of the first mode, the second mode, and the third mode. This application is also applied to a multi-transmission reception point scenario. When the terminal device sends transport blocks to one or more transmission reception points via a multi-antenna panel, the network device sends the first information, to indicate a transmission mode of an antenna panel on the terminal device.

With reference to the sixth aspect, in some implementations of the sixth aspect, when M is 2, the M modes include two modes of the first mode, the second mode, and the third mode; and the first information is used to determine one of the two modes.

Therefore, in this application, when M is 2, in the multi-antenna panel scenario, the network device can send the first information to the terminal device, to indicate the transmission mode. This application is also applied to a multi-transmission reception point scenario. When the terminal device sends transport blocks to one or more transmission reception points via antenna panels, the network device sends the first information to indicate one mode.

With reference to the sixth aspect, in some implementations of the fifth aspect, when M is 2, the fifth information is at least one bit in radio resource control RRC, a media access control control element MAC CE, or downlink control information DCI.

With reference to the sixth aspect, in some implementations of the sixth aspect, when M is 3, a value of N may be 1 or 2. When N is 1, the first information indicates one mode from three modes, and the three modes include the first mode, the second mode, and the third mode. In this case, the first information may be one bit or two bits. Alternatively, when N is 2, the first information indicates two modes from three modes, and the terminal device may send the transport block in one of the two modes; or when N is 2, the first information indicates two modes from three modes. In this case, the method further includes: receiving second information, where the second information specifically indicates one of the two modes as a target mode.

With reference to the sixth aspect, in some implementations of the sixth aspect, when a value of M is 3, a value of N is 1 or 2; and when a value of the first information is a first value, the first information indicates the two modes, and the two modes are the first mode and the second mode, or when a value of the first information is a second value, the first information indicates the one mode, and the mode is the third mode; or when a value of the first information is a first value, the first information indicates the two modes, and the two modes are the first mode and the second mode, or when a value of the first information is a second value, the first information indicates the two modes, and the two modes are the first mode and the third mode; or when a value of the first information is a first value, the first information indicates the two modes, and the two modes are the first mode and the third mode, or when a value of the first information is a second value, the first information indicates the one mode, and the mode is the second mode.

With reference to the sixth aspect, in some implementations of the sixth aspect, the first information is one bit in radio resource control RRC, a media access control control element MAC CE, or downlink control first information CI.

With reference to the sixth aspect, in some implementations of the sixth aspect, one bit of the first information indicates one mode or two modes.

With reference to the sixth aspect, in some implementations of the sixth aspect, the first information is at least one bit in radio resource control RRC, a media access control control element MAC CE, or downlink control information DCI.

With reference to the sixth aspect, in some implementations of the sixth aspect, at least one bit of the first information indicates one mode, and the at least one bit may be two bits.

With reference to the sixth aspect, in some implementations of the sixth aspect, one mode is determined from the M modes based on the first information; and when a value of the first information belongs to a first value set, the first information indicates that the mode is the first mode, and the first value set includes at least one value; or when a value of the first information belongs to a second value set, the first information indicates that the mode is the second mode, and the second value set includes at least one value; or when a value of the first information belongs to a third value set, the first information indicates that the mode is the third mode, and the third value set includes at least one value.

With reference to the sixth aspect, in some implementations of the sixth aspect, the method may further include: sending third information, where the third information indicates whether the M modes include the third mode.

With reference to the sixth aspect, in some implementations of the sixth aspect, the third information may be RRC, a MAC CE, or DCI.

With reference to the sixth aspect, in some implementations of the sixth aspect, the third information includes a first field; and when a value of the first field is a third value, the third information indicates that the M modes include the third mode; or when a value of the first field is a fourth value, the third information indicates that the M modes do not include the third mode. For example, the third value may be 0, and the fourth value is 1; or the third value is 1, and the fourth value is 0.

With reference to the sixth aspect, in some implementations of the sixth aspect, whether the M modes include the third mode may also be indicated based on whether the third information includes a first field. When the third information includes the first field, the M modes include the third mode, or when the third information does not include the first field, the M modes do not include the third mode. Alternatively, when the third information includes the first field, the M modes do not include the third mode, or when the third information does not include the first field, the M modes include the third mode.

According to a seventh aspect, a communication method is provided. The communication method may be performed by a terminal device, or may be performed by a chip or a circuit disposed in the terminal device. This is not limited in this application.

The communication method includes: receiving first information, and determining one mode or N modes based on the first information, where the one mode is one of M modes, the N modes are N modes of the M modes, N is an integer greater than 1, and M is an integer greater than or equal to N;
the M modes include at least one or more of a first mode, a second mode, and a third mode; and
the first mode is sending a transport block via one antenna panel; the second mode is sending same transport blocks at at least two moments via at least one antenna panel, and the transport block is sent at each of the at least two moments via one antenna panel; and the third mode is sending a same transport block simultaneously via at least two antenna panels, and different antenna panels send different parts of the transport block, or the third mode is sending one transport block simultaneously via each of at least two antenna panels; and sending a transport block in the one mode or one of the N modes.

Therefore, in this application, in the multi-antenna panel scenario, the terminal device receives the first information, to implement indicating a transmission mode of at least one antenna panel on the terminal device. That is, the first information can indicate the one or more of the first mode, the second mode, and the third mode. This application is also applied to a multi-transmission reception point scenario. When the terminal device sends transport blocks to one or more transmission reception points via a multi-antenna panel, the first information indicates a transmission mode of the antenna panel on the terminal device.

With reference to the seventh aspect, in some implementations of the seventh aspect, when M is 2, the M modes are two modes of the first mode, the second mode, and the third mode, N may be 1, and the first information is used to determine one mode of the two modes.

Therefore, in this application, when M is 2, in the multi-antenna panel scenario, the terminal device can receive the first information, to implement indicating the transmission mode of the antenna panel on the terminal device. This application is also applied to the multi-transmission reception point scenario. When the terminal device sends the transport blocks to the one or more transmission reception points via antenna panels, the first information is received and indicates one mode of the antenna panel on the terminal device.

With reference to the seventh aspect, in some implementations of the seventh aspect, when M is 2, the first information is at least one bit in radio resource control RRC, a media access control control element MAC CE, or downlink control information DCI.

With reference to the seventh aspect, in some implementations of the seventh aspect, when M is 3, a value of N may be 1 or 2. When N is 1, the first information indicates one mode from three modes, and the three modes include the first mode, the second mode, and the third mode. In this case, the first information may be one bit or two bits. Alternatively, when N is 2, the first information indicates one mode or two modes from the three modes, and the terminal device may send the transport block in the one mode or one of the two modes. When the first information indicates the two modes, the method further includes: receiving second information, where the second information specifically indicates one of the two modes.

With reference to the seventh aspect, in some implementations of the seventh aspect, when a value of M is 3, a value of N is 2; and
when a value of the first information is a first value, the first information indicates the two modes, and the two modes are the first mode and the second mode, or when a value of the first information is a second value, the first information indicates the one mode, and the mode is the third mode; or when a value of the first information is a first value, the first information indicates the two modes, and the two modes are the first mode and the second mode, or when a value of the first information is a second value, the first information indicates the two modes, and the two modes are the first mode and the third mode; or when a value of the first information is a first value, the first information indicates the two modes, and the two modes are the first mode and the third mode, or when a value of the first information is a second value, the first information indicates the one mode, and the mode is the second mode.

With reference to the seventh aspect, in some implementations of the seventh aspect, the first information is one bit in radio resource control RRC, a media access control control element MAC CE, or downlink control information DCI.

With reference to the seventh aspect, in some implementations of the seventh aspect, one bit of the first information indicates one mode or two modes.

With reference to the seventh aspect, in some implementations of the seventh aspect, the first information is at least one bit in radio resource control RRC, a media access control control element MAC CE, or downlink control information DCI.

With reference to the seventh aspect, in some implementations of the seventh aspect, at least one bit of the first information indicates one mode, and the at least one bit may be two bits.

With reference to the seventh aspect, in some implementations of the seventh aspect, one mode is determined from the M modes based on the first information; and when a value of the first information belongs to a first value set, the first information indicates that the mode is the first mode, and the first value set includes at least one value; or when a value of the first information belongs to a second value set, the first information indicates that the mode is the second mode, and the second value set includes at least one value; or when a value of the first information belongs to a third value set, the first information indicates that the mode is the third mode, and the third value set includes at least one value.

With reference to the seventh aspect, in some implementations of the seventh aspect, the method may further include: receiving third information, where the third information indicates whether the M modes include the third mode.

With reference to the seventh aspect, in some implementations of the seventh aspect, the third information may be RRC, a MAC CE, or DCI.

With reference to the seventh aspect, in some implementations of the seventh aspect, the third information includes a first field; and when a value of the first field is a third value, the third information indicates that the M modes include the third mode; or when a value of the first field is a fourth value, the third information indicates that the M modes do not include the third mode. For example, the third value may be 0, and the fourth value is 1; or the third value is 1, and the fourth value is 0.

With reference to the seventh aspect, in some implementations of the seventh aspect, whether the M modes include the third mode may also be indicated based on whether the third information includes a first field. When the third information includes the first field, the M modes include the third mode, or when the third information does not include the first field, the M modes do not include the third mode. Alternatively, when the third information includes the first field, the M modes do not include the third mode, or when the third information does not include the first field, the M modes include the third mode.

According to an eighth aspect, a communication method is provided. The communication method may be performed by a network device, or may be performed by a chip or a circuit disposed in the network device. This is not limited in this application.

The communication method includes: sending first information, where the first information is used to determine one mode or N modes, the one mode is one of M modes, the N modes are N modes of the M modes, N is an integer greater than 1, and M is an integer greater than or equal to N;
the M modes include at least one or more of a first mode, a second mode, and a third mode; and
the first mode is sending a transport block via one antenna panel; the second mode is sending same transport blocks at at least two moments via at least one antenna panel, and the transport block is sent at each of the at least two moments via one antenna panel; and the third mode is sending a same transport block simultaneously via at least two antenna panels, and different antenna panels send different parts of the transport block, or the third mode is sending one transport block simultaneously via each of at least two antenna panels; and sending a transport block in the one mode or one of the N modes.

Therefore, in this application, in the multi-antenna panel scenario, the network device sends the first information, to implement indicating a transmission mode of at least one antenna panel on the terminal device. That is, the first information can indicate the one or more of the first mode, the second mode, and the third mode. This application is also applied to a multi-transmission reception point scenario. When the terminal device sends transport blocks to one or more transmission reception points via a multi-antenna panel, the first information indicates a transmission mode of the antenna panel on the terminal device.

With reference to the eighth aspect, in some implementations of the eighth aspect, when M is 2, the M modes are two modes of the first mode, the second mode, and the third mode, N may be 1, and the first information is used to determine one mode of the two modes.

Therefore, in this application, when M is 2, in the multi-antenna panel scenario, the network device can send the first information, to implement indicating the transmission mode of the antenna panel on the terminal device. This application is also applied to the multi-transmission reception point scenario. When the terminal device sends the transport blocks to the one or more transmission reception points via antenna panels, the first information is received and indicates one mode of the antenna panel on the terminal device.

With reference to the eighth aspect, in some implementations of the eighth aspect, when M is 2, the first information is at least one bit in radio resource control RRC, a media access control control element MAC CE, or downlink control information DCI.

With reference to the eighth aspect, in some implementations of the eighth aspect, when M is 3, a value of N may be 1 or 2. When N is 1, the first information indicates one mode from three modes, and the three modes include the first mode, the second mode, and the third mode. In this case, the first information may be one bit or two bits. Alternatively, when N is 2, the first information indicates one mode or two modes from the three modes, and the terminal device may send the transport block in the one mode or one of the two modes. When the first information indicates the two modes, the method further includes: receiving second information, where the second information specifically indicates one of the two modes.

With reference to the eighth aspect, in some implementations of the eighth aspect, when a value of M is 3, a value of N is 2; and
when a value of the first information is a first value, the first information indicates the two modes, and the two modes are the first mode and the second mode, or when a value of the first information is a second value, the first information indicates the one mode, and the mode is the third mode; or when a value of the first information is a first value, the first information indicates the two modes, and the two modes are the first mode and the second mode, or when a value of the first information is a second value, the first information indicates the two modes, and the two modes are the first mode and the third mode; or when a value of the first information is a first value, the first information indicates the two modes, and the two modes are the first mode and the third mode, or when a value of the first information is a second value, the first information indicates the one mode, and the mode is the second mode.

With reference to the eighth aspect, in some implementations of the eighth aspect, the first information is one bit in radio resource control RRC, a media access control control element MAC CE, or downlink control information DCI.

With reference to the eighth aspect, in some implementations of the eighth aspect, one bit of the first information indicates one mode or two modes.

With reference to the eighth aspect, in some implementations of the eighth aspect, the first information is at least one bit in radio resource control RRC, a media access control control element MAC CE, or downlink control information DCI.

With reference to the eighth aspect, in some implementations of the eighth aspect, at least one bit of the first information indicates one mode, and the at least one bit may be two bits.

With reference to the eighth aspect, in some implementations of the eighth aspect, one mode is determined from the M modes based on the first information; and when a value of the first information belongs to a first value set, the first information indicates that the mode is the first mode, and the first value set includes at least one value; or when a value of the first information belongs to a second value set, the first information indicates that the mode is the second mode, and the second value set includes at least one value; or when a value of the first information belongs to a third value set, the first information indicates that the mode is the third mode, and the third value set includes at least one value.

With reference to the eighth aspect, in some implementations of the eighth aspect, the method may further include: sending third information, where the third information indicates whether the M modes include the third mode.

With reference to the eighth aspect, in some implementations of the eighth aspect, the third information may be RRC, a MAC CE, or DCI.

With reference to the eighth aspect, in some implementations of the eighth aspect, the third information includes a first field; and when a value of the first field is a third value, the third information indicates that the M modes include the third mode; or when a value of the first field is a fourth value, the third information indicates that the M modes do not include the third mode. For example, the third value may be 0, and the fourth value is 1; or the third value is 1, and the fourth value is 0.

With reference to the eighth aspect, in some implementations of the eighth aspect, whether the M modes include the third mode may also be indicated based on whether the third information includes a first field. When the third information includes the first field, the M modes include the third mode, or when the third information does not include the first field, the M modes do not include the third mode. Alternatively, when the third information includes the first field, the M modes do not include the third mode, or when the third information does not include the first field, the M modes include the third mode.

According to a ninth aspect, a communication apparatus is provided, and includes modules configured to implement steps of the communication method according to the implementations of any one of the first aspect to the eighth aspect.

According to a tenth aspect, a communication apparatus is provided, and includes a processor. The processor is configured to execute instructions stored in a memory, and when the instructions are executed, the communication apparatus is enabled to perform the communication method according to any one of the first aspect to the eighth aspect and the implementations of the first aspect to the eighth aspect.

According to an eleventh aspect, a computer-readable storage medium is provided. The computer-readable storage medium stores a program, and the program enables a receiving device to perform the communication method according to any one of the first aspect to the eighth aspect and the implementations of the first aspect to the eighth aspect.

According to a twelfth aspect, a chip apparatus is provided, and includes a processing circuit. The processing circuit is configured to invoke a program from a memory and run the program, so that a communication device on which the chip apparatus is installed performs the method according to any possible implementations of any one of the first aspect to the eighth aspect.

According to a thirteenth aspect, a computer program product including instructions is provided. When the instructions are executed by a computer, the computer is enabled to perform the communication method according to any one of the possible implementations of any one of the first aspect to the eighth aspect.

### BRIEF DESCRIPTION OF DRAWINGS

FIG. 1 is a diagram of an architecture of a wireless communication system according to an embodiment of this application;
FIG. 2 is a diagram of an example of an application scenario according to an embodiment of this application;
FIG. 3 is a schematic flowchart of an example of a communication method according to an embodiment of this application;
FIG. 4 is a schematic flowchart of another example of a communication method according to an embodiment of this application;
FIG. 5 is a schematic flowchart of another example of a communication method according to an embodiment of this application;
FIG. 6 is a schematic flowchart of another example of a communication method according to an embodiment of this application;
FIG. 7 is a block diagram of an example of a communication method according to an embodiment of this application;
FIG. 8 is a block diagram of another example of a communication method according to an embodiment of this application;
FIG. 9 is a block diagram of another example of a communication method according to an embodiment of this application;
FIG. 10 is a diagram of a structure of a terminal device according to an embodiment of this application;
FIG. 11 is a diagram of a structure of a network device according to an embodiment of this application; and
FIG. 12 is a diagram of a structure of a communication apparatus according to an embodiment of this application.

### DESCRIPTION OF EMBODIMENTS

Technical solutions in embodiments of this application are applied to various communication systems, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or NR. The technical solutions provided in this application are further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (internet of Things, IoT) communication system, or another communication system.

To meet requirements of three scenarios including enhanced mobile bandwidth, massive connections, and high reliability and low latency in 5G NR, compared with 4G LTE (long term evolution, LTE) using low frequency bands, 5G NR (new radio, NR) adds high frequency bands (generally considered as higher than 6 G), for example, a frequency band of 26 GHz, 28 GHz, 39 GHz, or 60 GHz. The high frequency band can achieve a larger bandwidth and a higher transmission rate. Due to a high signal frequency, severe attenuation is generated in a process in which a signal propagates in space, which severely limits signal coverage. To address this issue, a beamforming (beamforming, BF) technology is used in 5G NR to obtain a good directional gain, increase directional power in different transmit directions, improve a signal to interference plus noise ratio (signal to interference plus noise radio, SINR), and further improve system performance. In consideration of a balance between deployment costs and system performance, a hybrid beamforming (hybrid beamforming, HBF) technology including digital beamforming and analog beamforming is finally used in a 5G NR research process. In an implementation process of the beamforming technology, an antenna panel (antenna panel) is a core component, and beams are received or sent via the antenna panel. In a 5G NR deployment implementation process, a directional beam technology is used. To implement wide-area coverage, a base station (base station, BS) and a terminal are deployed with the multi-antenna panel. Especially for the terminal, to implement wide-area coverage in a case of limited space and costs-saving, deployment of the antenna panel has more significant impact on signal transmission performance of the terminal. In a current commercial product, two or three antenna panels are generally integrated into a mobile terminal, and more antenna panels, for example, four or eight antenna panels, may be integrated into a fixed terminal, for example, customer premises equipment (customer premises equipment, CPE)/fixed wireless access (fixed wireless access, FWA).

It should be understood that the antenna panel in embodiments of this application may be an antenna set. In addition, the antenna panel in embodiments of this application may also be replaced with the "antenna set".

Optionally, the antenna set may be an antenna set that can independently or separately control transmit power. The antenna set may alternatively be an antenna set capable of independent or separate timing. The antenna set may alternatively be an antenna set for which modulation and coding are performed independently or separately.

In an implementation, the antenna panel in embodiments of this application may be one capability value set in a capability value set list of a terminal device. Therefore, the antenna panel in embodiments of this application may alternatively be replaced with the "capability set". The capability value set may include a quantity of channel sounding reference signal (sounding reference signal, SRS) ports, a maximum quantity of SRS ports, a quantity of layers sent in uplink (uplink, UL), a maximum quantity of layers sent in UL, a coherence type of an antenna port, and the like.

Optionally, a correspondence exists between the capability value set and a synchronization signal and physical broadcast channel block (synchronization signal and physical broadcast channel block, SSB) resource indicator (SSB resource indicator, SSBRI), or a correspondence exists between the capability value set and a channel-state information reference signal (channel-state information reference signal, CSI-RS) resource indicator (CRI-RS resource indicator, CRI). Therefore, one antenna panel may also refer to one SSBRI or CRI.

In an implementation, the antenna panel in embodiments of this application may also be replaced with the "SSBRI" or "CRI".

Optionally, the correspondence between the capability value set and the SSBRI or the correspondence between the capability value set and the CRI may be determined by a terminal device. The terminal device may report the correspondence between the capability value set and the SSBRI or the correspondence between the capability value set and the CRI to a network device in beam reporting. Alternatively, the terminal device may report the capability value set, the SSBRI, or the CRI to a network device.

In an implementation, the antenna panel in embodiments of this application may be an SRS set. Therefore, the antenna panel in this application may also be referred to as the "SRS set".

Optionally, in embodiments of this application, a definition of one antenna panel may dynamically change. For example, one antenna panel includes a capability set of four SRS ports at a moment 1; and the antenna panel may include a capability set of two SRS ports at a moment 2 after the moment 1.

In embodiments of this application, a transport block (transport block, TB) is a basic unit for processing at a physical layer and for data exchange between a media access control (Media Access Control, MAC) sublayer and the physical layer. In an implementation, the transport block is a data block including a MAC protocol data unit (protocol data unit, PDU).

A mode in embodiments of this application may be a transmission mode, a transmission rule, a mapping manner, a mapping rule, or a resource determining manner.

The technical solutions of this application are described below with reference to accompanying drawings.

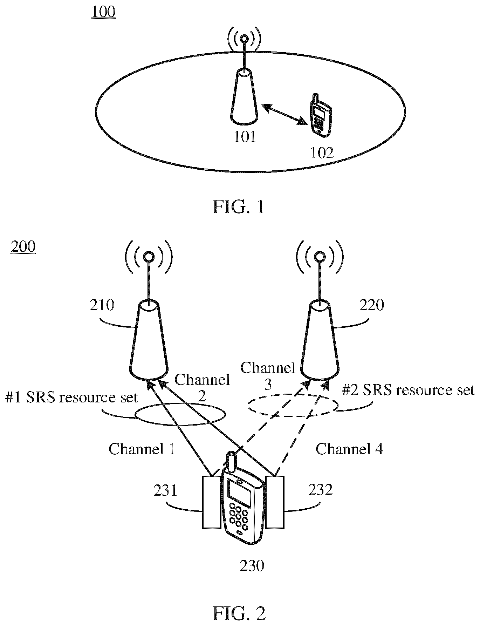

FIG. 1 is a diagram of an architecture of a wireless communication system according to an embodiment of this application. As shown in FIG. 1, the wireless communication system 100 may include a network device 101 and a terminal device 102. The terminal device 102 may be connected to the network device 101. The network device 101 may also be referred to as a base station device.

It should be understood that the communication system 100 may include a plurality of terminal devices 102 and a plurality of network devices 101. This is not limited in this embodiment of this application.

In an implementation, this application is applied to a plurality of mobile communication scenarios, including but not limited to scenarios such as point-to-point transmission between the network device 101 and the terminal device 102 or between the terminal devices 102, multi-hop transmission between the network device 101 and the terminal device 102, and DC (dual connectivity, dual connectivity) or multi-connection between a plurality of base stations and user devices.

It should be understood that the terminal device 102 in embodiments of this application may be an uncrewed aerial vehicle (uncrewed aerial vehicle, UAV), an access terminal, a subscriber unit, a subscriber station, a mobile station, a relay station, a remote station, a remote terminal, a mobile device, a user terminal, a user device (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in this embodiment of this application.

By way of an example, not a limitation, in embodiments of this application, the wearable device may also be referred to as an intelligent wearable device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry for monitoring physical signs.

In addition, in embodiments of this application, the terminal device may alternatively be a terminal device in an internet of things (internet of things, IoT) system. IoT is an important part of future development of information technologies. A main technical feature of the IoT is connecting a thing to a network by using a communication technology, to implement an intelligent network for man-machine interconnection and thing-thing interconnection. In embodiments of this application, an IoT technology may implement massive connections, deep coverage, and terminal power saving by using, for example, a narrowband (narrowband, NB) technology.

In addition, in embodiments of this application, the terminal device may alternatively include a sensor like an intelligent printer, a train detector, or a gas station. Main functions of the terminal device include collecting data (by some terminal devices), receiving control information and downlink data of a network device, sending an electromagnetic wave, and transmitting uplink data to the network device.

In an implementation, the terminal device 102 may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city, a wireless terminal in a smart home, or the like. In embodiments of this application, an apparatus configured to implement a function of a terminal may be a terminal, or an apparatus that can support the terminal in implementing the function, for example, a chip system. The apparatus may be installed in the terminal. The chip system may include a chip, or may include the chip and another discrete component.

It should be further understood that, the network device 101 in embodiments of this application includes an access network device, for example, a base station, where the BS may be a device that is deployed in a radio access network and that can perform wireless communication with the terminal. The base station may be in a plurality of forms such as a macro base station, a micro base station, a relay station, and an access point. For example, the base station in embodiments of this application may be a base station in 5G. The base station in 5G may also be referred to as a transmission reception point or a 5G base station (next-generation NodeB, gNB).

The network device 101 in embodiments of this application may be any communication device that has a wireless transceiver function and that is configured to communicate with the terminal device 102. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB or home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like. Alternatively, the device may be a gNB or a transmission point in a 5G system such as an NR system; may be an antenna panel or a group of antenna panels (including a multi-antenna panel) of a base station in a 5G system; or may be a network node, such as a baseband unit or a distributed unit (distributed unit, DU), that includes a gNB or a transmission point.

In some deployments, the network device 101 in embodiments of this application may be a central unit (central unit, CU) or a DU, or the network device includes a CU and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be divided into a control plane central unit (CU-CP) and a user plane central unit (CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes an SDAP layer and a PDCP-U layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an E1 interface). The CU-CP represents the network device and is connected to a core network device through a communication interface (for example, an Ng interface), and is connected to the DU through a communication interface (for example, an F1-C (control plane) interface). The CU-UP is connected to the DU through a communication interface (for example, an F1-U (user plane) interface). In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device 101 in this application may be a device including the CU or the DU, or the CU and the DU, or a device including a control plane CU node (a CU-CP node), a user plane CU node (a CU-UP node), and the DU node.

In embodiments of this application, the network device 101 and the terminal device 102 may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application.

In embodiments of this application, the terminal device 101 or the network device 102 includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In embodiments of this application, an apparatus configured to implement a function of a network device may be the network device 101, or may be an apparatus that can support the network device in implementing the function, for example, a chip system. The apparatus may be installed in the network device.

The technical solutions provided in embodiments of this application are applied to wireless communication between communication devices. The wireless communication between the communication devices may include wireless communication between the network device 102 and a terminal device 101, wireless communication between the network devices, and wireless communication between the terminals. In embodiments of this application, the term "wireless communication" may also be briefly referred to as "communication", and the term "communication" may also be described as "data transmission", "information transmission", or "transmission".

FIG. 2 is a diagram of an example of an application scenario according to an embodiment of this application. As shown in FIG. 2, the application scenario includes a network device 210, a network device 220, and a terminal device 230. The terminal device 230 includes an antenna panel 231 and an antenna panel 232. In an optional implementation, in the application scenario shown in FIG. 2, the network device 210 and the network device 220 may be two base stations. The network device 210 and the network device 220 may alternatively be two transmission reception points TRPs of one base station.

It should be understood that the application scenario may include a plurality of terminal devices and a plurality of network devices. There may be a plurality of antenna panels in the terminal device 230. This is not limited in embodiments of this application.

In an implementation, when the network device configures a plurality of SRS resource sets for the terminal device, the terminal device may determine SRS resources in the SRS resource sets by receiving an SRS resource indicator (SRS resource indicator, SRI) transmitted by the network device, to determine an antenna panel corresponding to uplink transmission and transmit precoding. The precoding may be digital beamforming and/or precoding, or analog beamforming and/or precoding, or digital and analog hybrid beamforming and precoding.

In an implementation, the network device may configure one or more SRS resource sets for the terminal device. One SRS resource set may include one or more SRS resources. One SRS resource may include an SRS resource ID, a quantity of SRS ports, an SRS time domain type indicator, an SRS periodicity, a time-frequency resource location of an SRS in one slot, and the like.

In an implementation, when the transmission mode is codebook (codebook, CB)-based uplink transmission, the network device may configure a plurality of SRS resource sets for the terminal device. Each SRS resource set includes one or more SRS resources, and the terminal device sends SRS resources in each SRS resource set to the network device. Each SRS resource corresponds to one uplink channel. The network device learns of different uplink channel quality based on the received SRS resources. The network device selects an SRS resource based on the uplink channel quality, and indicates the SRS resource to the terminal device. The network device sends an SRI, a transmission precoding matrix indicator (transmitted precoding matrix indicator, TPMI), and a transmission rank indication (transmitted rank indication, TRI) to the terminal device. The SRI indicates the SRS resource selected by the network device, and the terminal device may determine, based on the received SRI, the SRS resource selected by the network device. The terminal device sends a physical uplink shared channel (physical uplink share channel, PUSCH) in a beam direction in which the SRS resource is previously sent. Herein, sending a PUSCH may also be understood as sending data on a PUSCH. The terminal device may further determine, based on the SRS resource, the antenna panel or an antenna port for transmitting the PUSCH in an uplink transmission process. The TPMI indicates a precoding matrix used when the PUSCH is sent. The TRI indicates ranks (a quantity of ranks) used when the PUSCH is sent.

Optionally, for a codebook-based uplink transmission mode, each SRS resource set includes a maximum of two SRS resources, and each SRS resource is a multi-port SRS resource. In embodiments of this application, the SRS resource may be referred to as a channel. In embodiments of this application, the channel may also be a transmission link. For example, as shown in FIG. 2, the network device 210 and/or the network device 220 configure/configures two SRS resource sets for the terminal device 230, namely, a #1 SRS resource set and a #2 SRS resource set. Each SRS resource set in FIG. 2 corresponds to one network device. The #1 SRS resource set includes two SRS resources, namely, a channel 1 and a channel 2 shown in FIG. 2. Herein, the channel 1 may be referred to as an SRS resource 1, and the channel 2 may be referred to as an SRS resource 2. The #2 SRS resource set includes two SRS resources, namely, a channel 3 and a channel 4 shown in FIG. 2. Herein, the channel 3 may be referred to as an SRS resource 3, and the channel 4 may be referred to as an SRS resource 4.

In the application scenario in FIG. 2, the terminal device 230 has the two antenna panels 231 and 232, and the terminal device may send the four SRS resources to the network device via the two antenna panels. FIG. 2 shows that the terminal device sends the SRS resource 1 and the SRS resource 3 via the panel 231, and the terminal device sends the SRS resource 2 and the SRS resource 4 via the panel 232. When the network device indicates the selected SRS resource to the terminal device, the terminal device may determine the antenna panel corresponding to the SRS resource, to determine which antenna panel is for sending the PUSCH. For example, when the network device indicates, to the terminal device, that a selected SRS resource is the SRS resource 1, the terminal device can determine that an antenna panel corresponding to the SRS resource 1 is the antenna panel 231. Therefore, the terminal device can determine to send the PUSCH via the panel 231. Herein, sending a PUSCH may also be understood as sending a transport block.

FIG. 2 shows an example in which each SRS resource set includes two SRS resources. In an optional implementation, each SRS resource set may further include only one SRS resource.

In an implementation, when uplink transmission is non-codebook (non-codebook, NCB)-based uplink transmission, the network device may configure a plurality of SRS resource sets for the terminal device. Different from that in CB-based uplink transmission, in NCB-based uplink transmission, each SRS resource set includes a maximum of four SRS resources, and each SRS resource is a single-port SRS resource.

It should be understood that this application is applicable to a codebook-based or non-codebook-based uplink transmission mode. FIG. 2 shows a codebook-based uplink transmission scenario. FIG. 2 is merely an example for description. This is not limited in this application.

It may be understood that the network device may select one or more SRS resources, and indicate the one or more SRS resources to the terminal device, and the terminal device sends the PUSCH to the network device on the one or more SRS resources indicated by the network device. The terminal device may send the PUSCH to the network device on the one or more SRS resources in different transmission modes.

Optionally, in embodiments of this application, one PUSCH may include one or more transport blocks, and one antenna panel may send one transport block or a part of one transport block.

Optionally, in embodiments of this application, the network device may indicate one SRS resource to the terminal device by using one SRI, and the network device may indicate a plurality of SRS resources to the terminal device by using a plurality of SRIs. In this case, each SRI indicates one SRS resource.

Optionally, in embodiments of this application, that the terminal device sends a transport block to the network device via an antenna panel is specifically that the terminal device sends the transport block to the network device through one or more demodulation reference signal (demodulation reference signal, DMRS) ports on the antenna panel.

The following describes three modes in embodiments of this application.

The three modes in embodiments of this application include a first mode, a second mode, and a third mode.

### First mode

The first mode is a transmission mode in which the terminal device sends a transport block to the network device by using one antenna panel; or a transmission mode in which the terminal device sends a transport block to the network device via one antenna panel; or a transmission mode in which the terminal device sends a transport block to the network device on one antenna panel. For example, the terminal device 230 sends one transport block to the network device 210 by using the antenna panel 231. Alternatively, the terminal device 230 sends one transport block to the network device 210 and the network device 220 by using the antenna panel 231.

In a possible implementation, the first mode may alternatively be represented as sending a transport block based on one SRS resource set configuration by using one antenna panel. Specifically, the first mode means that the network device configures one SRS resource set for the terminal device, and the terminal device sends a transport block to the network device by using one antenna panel. In this case, the mode is the first mode. For example, as shown in FIG. 2, when an SRS resource set configured by the network device for the terminal device is the #1 SRS resource set, the first mode may be understood as that the terminal device 230 sends a transport block to the network device 210 by using the antenna panel 231, or the terminal device 230 sends a transport block to the network device 210 by using the antenna panel 232.

Optionally, in embodiments of this application, the first mode may alternatively be understood as sending a transport block on one antenna panel based on one SRS resource indicated by one SRI. For example, as shown in FIG. 2, when the network device indicates an SRS resource 1 to the terminal device by using one SRI, the terminal device sends a transport block to the network device 210 on the antenna panel 231 through the channel 1. Herein, there may be a co-location relationship between the SRS resource indicated by the SRI and a DMRS port for sending the transport block on the antenna panel. Therefore, the first mode may alternatively be understood as sending a transport block based on one co-location relationship.

Optionally, the first mode may also be referred to as a single sending mode.

### Second mode

The second mode is a transmission mode in which the terminal device sends same transport blocks at at least two moments by using at least one antenna panel, and the transport block is sent at each of the at least two moments by using one antenna panel; or the second mode is a transmission mode in which the terminal device sends same transport blocks at at least two moments via at least one antenna panel, and the transport block is sent at each of the at least two moments via one antenna panel; or the second mode is a transmission mode in which the terminal device sends same transport blocks at at least two moments on at least one antenna panel, and the transport block is sent at each of the at least two moments on one antenna panel.

For example, the terminal device 230 sends one transport block to the network device 210 at a first moment by using the antenna panel 231, and then the terminal device 230 sends a same transport block to the network device 220 at a second moment by using the antenna panel 232, where the first moment is different from the second moment.

For another example, the terminal device 230 sends one transport block to the network device 210 at a first moment by using the antenna panel 231, and then the terminal device 230 sends a same transport block to the network device 220 at a second moment by using the antenna panel 231, where the first moment is different from the second moment.

For another example, the terminal device 230 sends one transport block to the network device 210 at a first moment by using the antenna panel 231, and then the terminal device 230 sends a same transport block to the network device 210 at a second moment by using the antenna panel 232, where the first moment is different from the second moment.

Herein, the same transport blocks mean that information or data carried in two or more transport blocks is the same.

In the foregoing description of the second mode, the moment may be understood as a time unit. Correspondingly, the first moment and the second moment may be understood as a first time unit and a second time unit. In this case, the second mode may be understood as a transmission mode of sending same transport blocks in at least two time units by using at least one antenna panel, where the transport block is sent in each of the at least two time units by using one antenna panel. In this case, the first time unit and the second time unit do not overlap.

It should be understood that the time unit in embodiments of this application may be one or more symbols, one or more slots, one or more mini-slots (mini-slots), one or more frames (frames), one or more subframes (subframes), or one or more half-frames (half-frames).

In a possible implementation, the second mode may alternatively be represented as sending a transport block in each of at least two time units via one antenna panel based on a configuration of a plurality of SRS resource sets, where the at least two time units do not overlap. Specifically, the second mode means that the network device configures a plurality of SRS resource sets for the terminal device, and the terminal device sends transport blocks in at least two time units, and sends the transport block to the network device in each time unit by using one antenna panel, where two time units do not overlap. In this case, the mode is the second mode.

For example, as shown in FIG. 2, when SRS resource sets configured by the network device for the terminal device are the #1 SRS resource set and the #2 SRS resource set, the terminal device 230 sends one transport block to the network device 210 in a first time unit by using the antenna panel 231, and then the terminal device 230 sends a transport block to the network device 220 in a second time unit by using the antenna panel 232, where the first time unit is different from the second time unit.

For another example, when SRS resource sets configured by the network device for the terminal device are the #1 SRS resource set and the #2 SRS resource set, the terminal device 230 sends one transport block to the network device 210 in a first time unit by using the antenna panel 231, and then the terminal device 230 sends a transport block to the network device 220 in a second time unit by using the antenna panel 231, where the first time unit is different from the second time unit.

For another example, when SRS resource sets configured by the network device for the terminal device are the #1 SRS resource set and the #2 SRS resource set, the terminal device 230 sends one transport block to the network device 210 in a first time unit by using an antenna panel 231, and then the terminal device 230 sends a same transport block to the network device 210 in a second time unit by using the antenna panel 232, where the first time unit is different from the second time unit.

Optionally, in embodiments of this application, the second mode may alternatively be understood as sending a transport block in each of at least two time units via one antenna panel and based on SRS resources indicated by a plurality of SRIs, where the transport block is sent in each time unit based on one SRS resource. For example, as shown in FIG. 2, when the network device indicates the SRS resource 1 and the SRS resource 4 to the terminal device by using two SRIs, the terminal device sends a transport block to the network device 210 on the antenna panel 231 through the channel 1 in a first time unit, and then the terminal device sends a transport block to the network device 220 on the antenna panel 232 through the channel 4 in a second time unit. Herein, there may be a co-location relationship between the SRS resource indicated by the SRI and a DMRS port for sending the transport block on the antenna panel. Therefore, the second mode may alternatively be understood as sending transport blocks in at least two time units based on a plurality of co-location relationships.

Optionally, the second mode may also be referred to as an alternate sending mode.

### Third mode

The third mode is a transmission mode of sending a same transport block simultaneously by using at least two antenna panels on the terminal device, and different antenna panels send different parts of the transport block, or the third mode may be a transmission mode of sending one transport block simultaneously by using each of at least two antenna panels; or
the third mode is a transmission mode of sending a same transport block simultaneously via at least two antenna panels, and different antenna panels send different parts of the transport block, or the third mode may be a transmission mode of sending one transport block simultaneously via each of at least two antenna panels.

For example, the antenna panel 231 and the antenna panel 232 simultaneously send a same transport block, where the antenna panel 231 and the antenna panel 232 send different parts of the same transport block, or each of the antenna panel 231 and the antenna panel 232 on the terminal device 230 simultaneously sends one transport block.

In the third mode, the terminal device may send the transport block to a same network device, or send the transport block to different network devices by using a multi-antenna panel.

For example, the terminal device 230 sends one part of one transport block to the network device 210 by using the antenna panel 231, and the terminal device sends the other part of the transport block to the network device 210 by using the antenna panel 232.

For another example, the terminal device 230 sends one part of one transport block to the network device 210 by using the antenna panel 231, and the terminal device sends the other part of the transport block to the network device 220 by using the antenna panel 232.

For another example, the terminal device 230 sends one transport block to the network device 210 by using the antenna panel 231, and the terminal device sends another transport block to the network device 210 by using the antenna panel 232.

For another example, the terminal device 230 sends one transport block to the network device 210 by using the antenna panel 231, and the terminal device sends another transport block to the network device 220 by using the antenna panel 232.

Optionally, in embodiments of this application, the third mode may alternatively be understood as simultaneously sending the transport block on at least two antenna panels based on SRS resources indicated by a plurality of SRIs, where the transport block is sent on each antenna panel based on one SRS resource. For example, as shown in FIG. 2, when the network device indicates the SRS resource 1 and the SRS resource 4 to the terminal device by using two SRIs, the terminal device sends a transport block to the network device 210 on the antenna panel 231 through the channel 1, and the terminal device sends the transport block to the network device 220 on the antenna panel 232 through the channel 4. Herein, there may be a co-location relationship between the SRS resource indicated by the SRI and a DMRS port for sending the transport block on the antenna panel. Therefore, the third mode may alternatively be understood as sending the transport block simultaneously on the at least antenna panels based on a plurality of co-location relationships.

It should be understood that "simultaneous" in the third mode in embodiments of this application may be understood as that there is an intersection set between time units in which the at least two antenna panels on the terminal device send the transport block to the network device, or "simultaneous" may be understood as a same moment.

Optionally, the third mode may also be referred to as a simultaneous sending mode.

Optionally, in a scenario in which a multi-antenna panel is configured for the terminal device, when the terminal device sends the transport block to the network device, the first mode and the second mode are supported. The network device herein may be a transmission reception point.

Optionally, in a scenario in which a multi-antenna panel is configured for the terminal device, when the terminal device sends the transport block to the network device, the third mode is not supported. The network device herein may be a transmission reception point.

Optionally, in a scenario in which a multi-antenna panel is configured for the terminal device, when the terminal device sends the transport block to the plurality of network devices, the first mode, the second mode, and the third mode are supported. The network device herein may be a transmission reception point.

It may be understood that in each transmission mode, the terminal device sends the transport block to the network device on the one or more SRS resources indicated by the network device.

In the first mode, the network device may indicate one or two SRS resources to the terminal device. As shown in FIG. 2, the network device may indicate one SRS resource, for example, the SRS resource 1, the SRS resource 2, the SRS resource 3, or the SRS resource 4, to the terminal device; or the network device may indicate two SRS resources, for example, the SRS resource 1 and the SRS resource 3, or the SRS resource 2 and the SRS resource 4, to the terminal device. Therefore, the first mode corresponds to six channel group sets. The terminal device sends, by using one antenna panel, the transport block on the SRS resource indicated by the network device.

In the second mode, the network device may indicate two SRS resources to the terminal device. The terminal device sends the transport blocks to the network device at the first moment and the second moment by using one antenna panel. At each moment, the terminal device may send the transport block to the network device on one of the two SRS resources on one antenna panel. When two SRS resource sets are configured for the terminal device, and each SRS resource set includes two SRS resources, the second mode may include a plurality of channel group sets. Similarly, the third mode also includes a plurality of channel group sets.

Table 1 shows channel group sets corresponding to the three transmission modes in the CB-based uplink transmission communication scenario shown in FIG. 2.

**Table 1**

| Number | First mode | Number | Second mode | Number | Third mode |
|---|---|---|---|---|---|
| 1 | Channel 1 | 7 | Channel 1 and channel 4 | 19 | Channel 1 and channel 2 |
| 2 | Channel 2 | 8 | Channel 1 and channel 3 | 20 | Channel 3 and channel 4 |
| 3 | Channel 3 | 9 | Channel 2 and channel 3 | 21 | Channel 1 and channel 4 |
| 4 | Channel 4 | 10 | Channel 2 and channel 4 | 22 | Channel 2 and channel 3 |
| 5 | Channel 1 and channel 3 | 11 | Channel 4 and channel 1 | | |
| 6 | Channel 2 and channel 4 | 12 | Channel 3 and channel 1 | | |
| | | 13 | Channel 3 and channel 2 | | |
| | | 14 | Channel 4 and channel 2 | | |
| | | 15 | Channel 1 and channel 2 | | |
| | | 16 | Channel 3 and channel 4 | | |
| | | 17 | Channel 2 and channel 1 | | |
| | | 18 | Channel 4 and channel 3 | | |

As shown in Table 1, when a transmission mode is the first mode, there are six channel group sets in total, and the channel group sets are numbered 1 to 6.

The channel group sets corresponding to the first mode may include two sub-modes, namely, a first mode 1 and a first mode 2. The first mode 1 includes four channel group sets numbered 1 to 4. For example, when the first mode corresponds to the number 2 in the first mode 1, as shown in FIG. 2, the antenna panel 232 on the terminal device 230 sends a transport block to the network device 210 through the channel 2. The first mode 2 includes two channel group sets numbered 5 and 6. For example, when the first mode corresponds to the number 5 in the first mode 2, as shown in FIG. 2, the antenna panel 231 on the terminal device 230 may send one transport block to each of the network device 210 and the network device 220 through the channel 1 and the channel 3.

When a transmission mode is the second mode, there are 12 channel group sets in total, and the channel group sets corresponding to the second mode may include three sub-modes, namely, a second mode 1, a second mode 2, and a second mode 3. The second mode 1 includes four channel group sets numbered 7 to 10. For example, when the second mode corresponds to the number 7 in the second mode 1, as shown in FIG. 2, the antenna panel 231 on the terminal device 230 sends one transport block to the network device 210 at a first moment through the channel 1, and the antenna panel 232 on the terminal device 230 sends a same transport block to the network device 220 at a second moment through the channel 4, where the first moment is different from the second moment. The second mode 2 includes four channel group sets numbered 11 to 14. For example, when the second mode corresponds to the number 11 in the second mode 2, as shown in FIG. 2, the antenna panel 232 on the terminal device 230 sends one transport block to the network device 220 at a first moment through the channel 4, and the antenna panel 231 on the terminal device 230 sends a same transport block to the network device 210 at a second moment through the channel 1, where the first moment is different from the second moment. The second mode 3 includes four channel group sets numbered 15 to 18. For example, when the second mode corresponds to the number 15 in the second mode 3, as shown in FIG. 2, the antenna panel 231 on the terminal device 230 sends one transport block to the network device 210 at a first moment through channel 1, and the antenna panel 232 on the terminal device 230 sends a same transport block to the network device 210 at a second moment through the channel 2, where the first moment is different from the second moment. It should be noted that in the second mode, each channel group set shows a case in which two channels are included, and the two channels represent a sequence in which the terminal device sends transport blocks to the network device. For example, for the channel group set numbered 7, the channel group set includes the channel 1 and the channel 4. In this case, the terminal device first sends a transport block to the network device through the channel 1, and then sends a transport block to the network device through the channel 4. For example, for the channel group set numbered 11, the channel group set includes the channel 4 and the channel 1. In this case, the terminal device first sends a transport block to the network device through the channel 4, and then sends a transport block to the network device through the channel 1.

When a transmission mode is the third mode, there are four channel group sets in total, and the channel group sets corresponding to the third mode may include two sub-modes, namely, a third mode 1 and a third mode 2. The third mode 1 includes two channel group sets numbered 19 and 20. For example, when the third mod corresponds to the number 20 in the third mode 1, as shown in FIG. 2, the antenna panel 231 and the antenna panel 232 on the terminal device 230 simultaneously send a same transport block to the network device 220 through the channel 3 and the channel 4 respectively, where the antenna panel 231 and the antenna panel 232 send different parts of the transport block. Alternatively, the channel group set corresponding to the number 20 may be understood as that the antenna panel 231 and the antenna panel 232 on the terminal device 230 each simultaneously send one transport block to the network device 220 through the channel 3 and the channel 4 respectively. The third mode 2 includes two channel group sets numbered 21 and 22. For example, when the third mode corresponds to the number 21 in the third mode 1, as shown in FIG. 2, the antenna panel 231 on the terminal device 230 and the antenna panel 232 on the terminal device 230 send a same transport block to the network device 210 and the network device 220 through the channel 1 and the channel 4 respectively, where the antenna panel 231 and the antenna panel 232 transmit different parts of the transport block. Alternatively, the channel group set corresponding to the number 21 may be understood as that the antenna panel 231 on the terminal device 230 sends one transport block to the network device 210 through the channel 1 and the antenna panel 232 sends one transport block to the network device 220 through the channel 4.

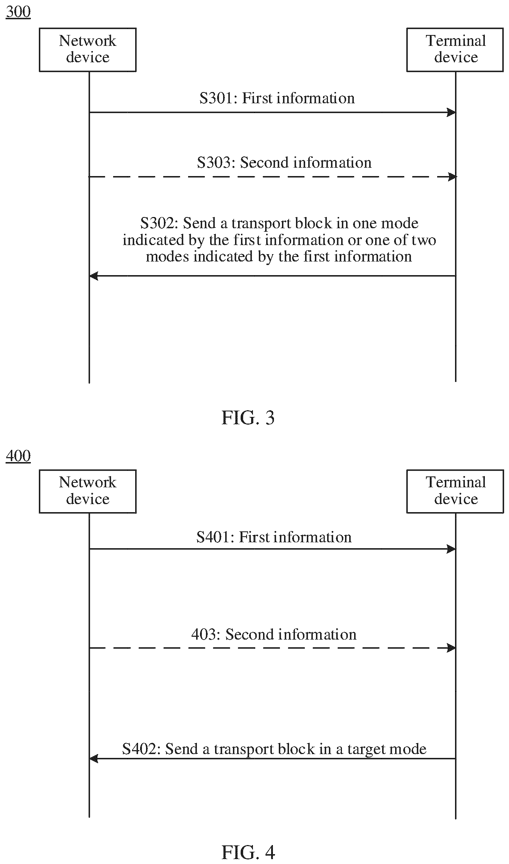

FIG. 3 is a schematic flowchart of a communication method according to an embodiment of this application.

S301: A network device sends first information to a terminal device.

Specifically, the first information indicates one mode or two modes, where the one mode is one of a first mode, a second mode, or a third mode, and the two modes are two of the first mode, the second mode, or the third mode.

For example, in an implementation, it may be determined, by receiving the first information sent by the network device, that a transmission mode of an antenna panel at a terminal device side is the one mode of the three modes, or the first information may further indicate that a transmission mode of an antenna panel at a terminal device side is the two modes of the three modes.

In an implementation, the first information may be one bit. Optionally, the bit is carried in radio resource control (radio resource control, RRC) information, a media access control control element (medium access control control element, MAC CE), or downlink control information (downlink control information, DCI). Specifically, a value of the bit may indicate the antenna panel at the terminal device side to select the one mode or two modes of the three modes.

For example, the first information is one bit in the DCI; and when a first value of the bit in the DCI is 1, the first information indicates two modes, and the two modes are the first mode and the second mode; or when a second value of the bit in the DCI is 0, the first information indicates one mode, and the mode is the third mode.

For another example, the first information is one bit in the DCI; and when a first value of the bit in the DCI is 1, the first information indicates two modes, and the two modes are the first mode and the second mode; or when a second value of the bit in the DCI is 0, the first information indicates two modes, and the two modes are the first mode and the third mode. For another example, the first information is one bit in the DCI; and when a first value of the bit in the DCI is 1, the first information indicates two modes, and the two modes are the first mode and the third mode; or when a second value of the bit in the DCI is 0, the first information indicates one mode, and the mode is the second mode.

The foregoing uses only an example in which the first value is 1 and the second value is 0. It may be understood that the first value may be 0, and the second value may be 1.

When the first information is the first value, the first information indicates any one or two of the three modes. When the first information is the second value, the first information indicates one or two of the three modes that are not completely the same as the one or two modes. This is not limited in this embodiment of this application, and details are not described herein.

In an implementation, the first information may be two bits. Optionally, when the first information is two bits, the first indication may directly indicate one mode. The two bits may be carried in RRC information, a MAC CE, or DCI.

S302: The terminal device sends a transport block in the transmission mode indicated by the first information or one of the two transmission modes indicated by the first information.

Optionally, when the first information indicates the one mode, the terminal device sends the transport block in the mode indicated by the first information; or when the first information indicates the two modes, the terminal device sends the transport block in one of the two modes indicated by the first information.

Optionally, when the first information indicates the two modes, the method may further include step S303: The network device sends second information to the terminal device, where the second information is used to indicate the mode of the two modes.

For example, when the first information indicates that the transmission mode of the antenna panel on the terminal device is the first mode and the third mode, the terminal device may send the transport block in the first mode or the third mode, or the terminal device may receive the second information sent by the network device, where the second information indicates whether the mode used by the terminal device is the first mode or the third mode.

In an implementation, the second information may be at least one bit in RRC, a MAC CE, or DCI. For example, when the first information indicates that the transmission mode of the antenna panel on the terminal device is the first mode and the second mode, and the second information is two bits configured in DCI, values of the two bits configured in the DCI may further indicate whether the transmission mode of the antenna panel on the terminal device is the first mode or the second mode.

Specifically, the transmission mode that is of the antenna panel on the terminal device and that is indicated by the second information sent by the network device is the mode, of the two modes, determined by the terminal device based on the first information.

Optionally, in this embodiment of this application, the first information specifically indicates the one mode or two modes from a plurality of modes, where the plurality of modes include one or more of the first mode, the second mode, or the third mode; and the method in this embodiment of this application further includes receiving third information, where the third information indicates whether the plurality of modes include the third mode.

Optionally, the third information may be RRC, a MAC CE, or DCI.

Optionally, the third information includes a first field; and when a value of the first field is a third value, the third information indicates that the plurality of modes include the third mode; or when a value of the first field is a fourth value, the third information indicates that the plurality of modes do not include the third mode. For example, the third value may be 0, and the fourth value is 1; or the third value is 1, and the fourth value is 0.

Optionally, whether the plurality of modes include the third mode may also be determined based on whether the third information includes a first field. For example, when the third information includes the first field, the plurality of modes include the third mode; or when the third information does not include the first field, the plurality of modes do not include the third mode. For another example, when the third information includes the first field, the plurality of modes do not include the third mode; or when the third information does not include the first field, the plurality of modes include the third mode.

FIG. 4 is a schematic flowchart of another example of a communication method according to an embodiment of this application.

S401: A network device sends first information to a terminal device.

Specifically, the first information is used to determine a target mode from at least two modes, where the at least two modes include at least two of a first mode, a second mode, or a third mode.

S402: The terminal device sends a transport block in the target mode.

The following provides four optional implementations for the embodiment in FIG. 4.

Implementation 1: The at least two modes may be two modes, and the two modes may be the first mode and the third mode, or the two modes may be the second mode and the third mode, or the two modes may be the first mode and the second mode. In this case, the first information indicates one mode from the two modes, and the mode is the target mode. In this case, the first information may be one bit, and different values of the bit indicate one mode or the other mode of the two modes. The bit may be carried in RRC, a MAC CE, or DCI.

Implementation 2: The at least two modes may be three modes, and the three modes include the first mode, the second mode, and the third mode. In this case, the first information is used to determine the target mode from the three modes, and the target mode is one of the three modes. In Implementation 2, content indicated by the first information may include two cases:

Case 1: The first information directly indicates one mode of the three modes.

Case 2: The first information indicates two modes of the three modes.

In this implementation, the first information indicates the one mode or two modes, the one mode is the first mode, the second mode, or the third mode, and the two modes are two modes of the first mode, the second mode, or the third mode. When the first information has different values, the first information may indicate the one mode or two modes. When the first information is one bit, and the bit has different values, the first information may indicate the one mode or two modes of the three modes. When the first information is two bits, the first information may directly indicate one mode. The first information in this implementation is the same as the first information in the embodiment in FIG. 3, and details are not described herein again.

Optionally, same as that in the embodiment in FIG. 3, when the first information indicates the two modes, the terminal device may determine one of the two modes as the target mode; or when the first information indicates the two modes, the method may further include S403: The terminal device receives second information, where the second information indicates the mode of the two modes, and the mode is the target mode. Descriptions of the second information are the same as the descriptions of the second information in the embodiment in FIG. 3, and details are not described herein again.

Optionally, the method in this embodiment of this application further includes receiving third information, where the third information indicates whether the at least two modes include the third mode.

Optionally, the third information may be RRC, a MAC CE, or DCI.

Optionally, the third information includes a first field; and when a value of the first field is a third value, the third information indicates that the at least two modes include the third mode; or when a value of the first field is a fourth value, the third information indicates that the at least two modes do not include the third mode. For example, the third value may be 0, and the fourth value is 1; or the third value is 1, and the fourth value is 0.

Optionally, whether the at least two modes include the third mode may also be determined based on whether the third information includes a first field. For example, when the third information includes the first field, the at least two modes include the third mode; or when the third information does not include the first field, the at least two modes do not include the third mode. For another example, when the third information includes the first field, the at least two modes do not include the third mode; or when the third information does not include the first field, the at least two modes include the third mode.

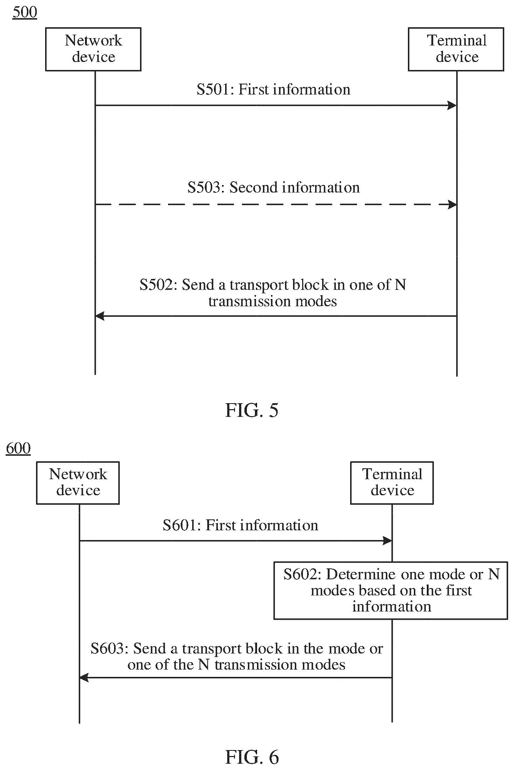

FIG. 5 is a schematic flowchart of another example of a communication method according to an embodiment of this application.

S501: A network device sends first information to a terminal device, and the terminal device receives the first information sent by the network device.

The first information is used by the terminal device to determine N modes from M modes, where N is an integer greater than 0, and M is an integer greater than or equal to N.

The M modes include one or more of a first mode, a second mode, or a third mode.

In a possible implementation, a value of M is 2. When the value of M is 2, a value of N may be 1. In this case, the first information is used to determine one transmission mode from two transmission modes. It may be understood that in this case, this embodiment is the same as Implementation 1 in the embodiment in FIG. 4.

In another optional implementation, a value of M is 3. A value of N may be 1 or a value of N may be 2.

When the value of M is 3, and the value of N is 1, in this case, this embodiment is the same as Case 1 in Implementation 2 in the embodiment in FIG. 4.

When the value of M is 3, and the value of N is 2, in this case, this embodiment is the same as Case 2 in Implementation 2 in the embodiment in FIG. 4.

For details, refer to the descriptions of embodiments in FIG. 4 and FIG. 3. Details are not described herein again.

It may be understood that M and N may alternatively have other values. For example, a value of M may be 4, 5, 6, or another possible positive integer value, and N may be any positive integer value less than or equal to M.

S502: The terminal device sends a transport block in one of the N transmission modes.

Optionally, same as that in the embodiment in FIG. 3, when the first information indicates two modes, the terminal device may determine one of the two modes as a target mode; or when the first information indicates two modes, the method may further include S503: The terminal device receives second information, where the second information indicates one of the two modes, and the mode is a target mode. Descriptions of the second information are the same as the descriptions of the second information in the embodiment in FIG. 3, and details are not described herein again.

Optionally, the method in this embodiment of this application further includes: receiving third information, where the third information indicates whether the M modes include the third mode.

Optionally, the third information may be RRC, a MAC CE, or DCI.

Optionally, the third information includes a first field; and when a value of the first field is a third value, the third information indicates that the M modes include the third mode; or when a value of the first field is a fourth value, the third information indicates that the M modes do not include the third mode. For example, the third value may be 0, and the fourth value is 1; or the third value is 1, and the fourth value is 0.

Optionally, whether the M modes include the third mode may also be determined based on whether the third information includes a first field. For example, when the third information includes the first field, the M modes include the third mode; or when the third information does not include the first field, the M modes do not include the third mode. For another example, when the third information includes the first field, the M modes do not include the third mode; or when the third information does not include the first field, the M modes include the third mode.

FIG. 6 is a schematic flowchart of another example of a communication method according to an embodiment of this application.

S601: A network device sends first information to a terminal device, and the terminal device receives the first information sent by the network device.

S602: The terminal device determines one mode or N modes based on the first information, where the one mode is one of M modes, the N modes are N modes of the M modes, N is an integer greater than 1, and M is an integer greater than or equal to N.

The M modes include at least one or more of a first mode, a second mode, and a third mode.

In a possible implementation, a value of M may be 2. In this case, the terminal device may determine one mode from the two modes based on the first information. Alternatively, it may be understood that the first information indicates one mode from the two modes. It may be understood that, in this case, this embodiment is the same as Implementation 1 in the embodiment in FIG. 4.

In a possible implementation, a value of M may be 3. In this case, the terminal device may determine one mode or N modes from the three modes based on the first information, where N may be equal to 2.

When the terminal device determines the one mode from the three modes based on the first information, in this case, for this embodiment, refer to Case 1 in Implementation 2 in the embodiment in FIG. 4. When the terminal device determines the N modes from the three modes based on the first information, where N=2, in this case, for this embodiment, refer to Case 2 in Implementation 2 in the embodiment in FIG. 4.

It may be understood that M and N may alternatively have other values. For example, a value of M may be 4, 5, 6, or another possible positive integer value, and N may be any positive integer value less than or equal to M.

S603: The terminal device sends a transport block in the mode or one of the N modes.

Optionally, same as that in the embodiment in FIG. 3, when the first information indicates two modes, the terminal device may determine one of the two modes as a target mode; or when the first information indicates two modes, the method may further include: The terminal device receives second information, where the second information indicates one of the two modes, and the mode is a target mode. Descriptions of the second information are the same as the descriptions of the second information in the embodiment in FIG. 3, and details are not described herein again.

Optionally, the method in this embodiment of this application further includes: receiving third information, where the third information indicates whether the M modes include the third mode.

Optionally, the third information may be RRC, a MAC CE, or DCI.

Optionally, the third information includes a first field; and when a value of the first field is a third value, the third information indicates that the M modes include the third mode; or when a value of the first field is a fourth value, the third information indicates that the M modes do not include the third mode. For example, the third value may be 0, and the fourth value is 1; or the third value is 1, and the fourth value is 0.

Optionally, whether the M modes include the third mode may also be determined based on whether the third information includes a first field. For example, when the third information includes the first field, the M modes include the third mode; or when the third information does not include the first field, the M modes do not include the third mode. For another example, when the third information includes the first field, the M modes do not include the third mode; or when the third information does not include the first field, the M modes include the third mode.

The technical solutions in embodiments in FIG. 3 to FIG. 6 are described below in detail.

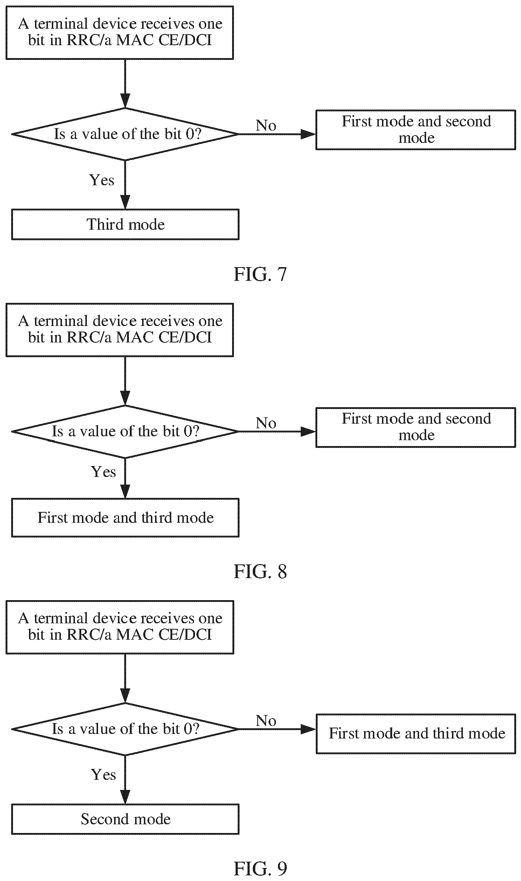

FIG. 7 to FIG. 9 show three examples in which first information indicates a transmission mode of an antenna panel on a terminal device when the first information is one bit in RRC, a MAC CE, or DCI.

FIG. 7 is a block diagram of an example of a communication method according to an embodiment of this application.

In FIG. 7, first information is one bit. When the first information is a first value, the first information indicates two modes, and the two modes are a first mode and a second mode; or when the first information is a second value, the first information indicates one mode, and the mode is a third mode.

When a value of the bit in RRC, a MAC CE, or DCI is 0, the first information indicates the third mode.

In an implementation, a terminal device may determine, by receiving fourth information, a channel group set in the third mode. For example, the fourth information may be two SRI fields in DCI, and each SRI field corresponds to one bit. In the codebook-based uplink transmission scenario shown in FIG. 2, when the value of the first information, namely, the bit in the RRC, the MAC CE, or the DCI, indicates the third mode, a correspondence between a value of the fourth information and the channel group set in the third mode is shown in Table 2.

**Table 2**

| Value of third information | | Channel group set |
|---|---|---|
| #1 SRI | #2 SRI | |
| 0 | 0 | Channel 1 and channel 2 |
| 0 | 1 | Channel 1 and channel 4 |
| 1 | 0 | Channel 2 and channel 3 |
| 1 | 1 | Channel 3 and channel 4 |

It can be learned from the foregoing Table 2 that when the first information is one bit in the DCI, and the value of the bit in the DCI being 0 indicates the third mode, the value of the fourth information, namely, the two SRI fields in the DCI, may indicate the specific channel group set in the third mode. For example, when the fourth information is the two SRI fields in the DCI, each SRI field corresponds to one bit, a value of the bit in the #1 SRI field in the DCI is 0, and a value of the bit in the #2 SRI field in the DCI is 0, the channel group set is the channel 1 and the channel 2. In this case, refer to FIG. 2, in the scenario shown in FIG. 2, the terminal device may determine that the channel 1 corresponds to the antenna panel 231, and the channel 2 corresponds to the antenna panel 232. Therefore, it may be understood as that the antenna panel 231 on the terminal device 230 and the antenna panel 232 on the terminal device 230 simultaneously send a same transport block to the network device 210 through the channel 1 and the channel 2 respectively in the channel group set in the third mode, where the antenna panel 231 and the antenna panel 232 send different parts of the transport block; or that the antenna panel 231 on the terminal device 230 and the antenna panel 232 on the terminal device 230 each simultaneously send one transport block to the network device 210 through the channel 1 and the channel 2 respectively.

It should be understood that the correspondence between the value of the bit in each SRI field and the channel group set in the third mode in Table 2 is an example. This is not limited in this embodiment of this application.

Alternatively, when a value of the bit in the RRC, the MAC CE, or the DCI is 1, it indicates that a transmission mode of an antenna panel on the terminal device is the first mode and the second mode.

In an implementation, when the value of the bit in the RRC, the MAC CE, or the DCI is 1, it indicates that the transmission mode of the antenna panel on the terminal device is the first mode and the second mode. The terminal device may send a transport block in the first mode or the second mode. Alternatively, the terminal device may receive second information, where the second information indicates whether the transmission mode is the first mode or the second mode. The second information may be at least one bit in RRC, a MAC CE, or DCI. For example, the second information may be two bits configured in the DCI. It should be understood that a value of the second information may be understood as values of the two bits configured in the DCI.

In an implementation, in the application scenario in FIG. 2, the second information may indicate, by using the two bits configured in the DCI, whether the transmission mode of the antenna panel on the terminal device is the first mode or the second mode. Optionally, the second information may further indicate a sub-mode of the first mode or a sub-mode of the second mode. For example, the second information is the two bits configured in the DCI; and when the value of the second information is 00, it indicates the first sub-mode 1 of the first mode; or when the value of the second information is 01, it indicates the first sub-mode 2 of the first mode. For example, a correspondence between a value of the second information and a sub-mode is not limited in this application.

In an implementation, the terminal device may further determine, by receiving fourth information, a channel group set in the first mode or the second mode. For example, the fourth information is two bits in DCI, and two SRI fields carried in the DCI each occupy one bit. In the codebook-based uplink transmission scenario shown in FIG. 2, when the value of the first information, namely, the bit in the RRC, the MAC CE, or the DCI, being 1 indicates that the transmission mode of the antenna panel on the terminal device is the first mode and the second mode, the terminal device may receive the second information and the fourth information that are sent by the network device and that indicate channel group sets in the first mode and the second mode, as shown in Table 3.

**Table 3**

| Value of second information | #1 SRI | #2 SRI | Channel group set | Value of second information | #1 SRI | #2 SRI | Channel group set |
|---|---|---|---|---|---|---|---|
| 00 | 0 | 0 | Channel 1 | 10 | 0 | 0 | Channel 1 and channel 4 |
| First mode 1 | | | | Second mode 1 | | | |
| | 0 | 1 | Channel 2 | | 0 | 1 | Channel 1 and channel 3 |
| | 1 | 0 | Channel 3 | | 1 | 0 | Channel 2 and channel 3 |
| | 1 | 1 | Channel 4 | | 1 | 1 | Channel 2 and channel 4 |
| 01 | 0 | 0 | Channel 1 and channel 3 | 11 | 0 | 0 | Channel 4 and channel 1 |
| First mode 2 | | | | Second mode 2 | | | |
| | 0 | 1 | Channel 2 and channel 4 | | 0 | 1 | Channel 3 and channel 1 |
| | | | | | 1 | 0 | Channel 3 and channel 2 |
| | | | | | 1 | 1 | Channel 4 and channel 2 |

Refer to Table 3. A first column and a fifth column in Table 3 indicate values of the second information, and the value of the second information may be 2 bits. As shown in Table 3, the values of the second information may be 00, 01, 10, and 11. A second column and a third column in Table 3 are values of two SRI fields respectively, and a sixth column and a seventh column are values of two SRI fields respectively. As shown in Table 3, for each value of the second information, the two SRI fields may have a maximum of four values, which are respectively 00, 01, 11, and 10.

It can be learned from Table 3 that when the second information being the two bits in the DCI indicates one of the first mode and the second mode, a value of the fourth information (namely, two SRI fields in DCI) may further indicate the channel group sets in the first mode and the second mode.

As shown in Table 3, when the values of the second information, namely, the two bits in the DCI, are 00 and 01, it indicates that the transmission mode of the antenna panel on the terminal device is the first mode. When the value of the second information is 00, it corresponds to a sub-mode of the first mode: a first mode 1, and when the value of the second information is 01, it corresponds to a sub-mode of the first mode: a first mode 2. When the values of the second information, namely, the two bits in the DCI, are 10 and 11, it indicates that the transmission mode of the antenna panel on the terminal device is the second mode. When the value of the second information is 10, it corresponds to a sub-mode of the second mode: a second mode 1, and when the value of the second information is 11, it corresponds to a sub-mode of the second mode: a second mode 2.

It should be understood that Table 3 shows eight channel group sets in the 12 channel group sets in the second mode as examples. This is not limited in this embodiment of this application.

For example, in the scenario shown in FIG. 2, when the value of the second information, namely, the two bits in the DCI, is 10, a value of one bit in the #1 SRI field carried in the fourth information, namely, the DCI, is 0, and a value of one bit in the #2 SRI field is 1, the channel group set in the second mode is the channel 1 and the channel 3. In this case, it may be understood that the antenna panel 231 on the terminal device 230 sends one transport block to the network device 210 at a first moment through the channel 1, and the antenna panel 231 on the terminal device 230 sends a same transport block to the network device 220 at a second moment through the channel 3, where the first moment is different from the second moment.

In an implementation, based on the communication scenario in Table 3, the terminal device may further receive the second information and the fourth information that are sent by the network device and that indicate channel group sets in the first mode and the second mode, as shown in Table 4.

**Table 4**

| Value of second information | #1 SRI | #2 SRI | Channel group set | Value of second information | #1 SRI | #2 SRI | Channel group set |
|---|---|---|---|---|---|---|---|
| 00 | 0 | | Channel 1 | 10 | 0 | 0 | Channel 1 and channel 4 |
| First mode 1 | | | | Second mode 1 | | | |
| | 1 | | Channel 2 | | 0 | 1 | Channel 1 and channel 3 |
| | | | | | 1 | 0 | Channel 2 and channel 3 |
| | | | | | 1 | 1 | Channel 2 and channel 4 |
| 01 | 0 | | Channel 3 | 11 | 0 | 0 | Channel 4 and channel 1 |
| First mode 2 | | | | Second mode 2 | | | |
| | 1 | | Channel 4 | | 0 | 1 | Channel 3 and channel 1 |
| | | | | | 1 | 0 | Channel 3 and channel 2 |
| | | | | | 1 | 1 | Channel 4 and channel 2 |

It should be understood that different from that in Table 3, in Table 4, when the values of the second information, namely, the two bits in the DCI, are 00 and 01, the channel group set in the first mode may be determined based on a value of one bit of one SRI field in the fourth information, namely, the DCI. In this case, the #2 SRI field in the fourth information, namely, the DCI, is not used. When the value of the second information is 00, it indicates that the channel group set in the first mode is the channel 1 or the channel 2. When the value of the second information is 01, it indicates that the channel group set in the first mode is the channel 3 or the channel 4. In addition, steps and specific processes of determining the channel groups in the first mode and the second mode in Table 4 may be similar to those in Table 3. To avoid repetition, detailed descriptions thereof are omitted herein.

For example, when the value of the second information is 00, the second information indicates the first mode; and when a value of the fourth information is 0, the fourth information indicates the channel 1 in the first mode. In this case, the terminal device sends a transport block to the network device 210 on the antenna panel 231 through the channel 1.

For example, when the value of the second information is 10, the second information indicates the second mode; and when a value of the fourth information is 00, it indicates that the channel group set is the channel 1 and the channel 4. In this case, the terminal device 230 sends a transport block to the network device 210 at the first moment through the channel 1 on the antenna panel 231, and then the terminal device 230 sends a same transport block to the network device 220 at a second moment through the channel 4 on the antenna panel 232.

It should be understood that correspondences between the values of the second information, the values of the two SRI fields in the fourth information, and the channel group sets in the first mode and the second mode in Table 3 and Table 4 are examples. This is not limited in this embodiment of this application.

FIG. 8 is a block diagram of another example of a communication method according to an embodiment of this application.

In FIG. 8, first information is one bit. When the first information is a first value, the first information indicates two modes, and the two modes are a first mode and a second mode; or when the first information is a second value, the first information indicates two modes, and the two modes are a first mode and a third mode.

A terminal device receives the first information sent by a network device, where the first information may be one bit in RRC, a MAC CE, or DCI.

When a value of the bit in the RRC, the MAC CE, or the DCI is 0, it indicates that a transmission mode of an antenna panel on the terminal device is the first mode and the third mode.

In an implementation, when the value of the bit in the RRC, the MAC CE, or the DCI is 0, it indicates that the transmission mode of the antenna panel on the terminal device is the first mode and the third mode. The terminal device may send a transport block in the first mode or the third mode. Alternatively, the terminal device may receive second information, where the second information indicates whether the transmission mode is the first mode or the third mode. The second information may be at least one bit in RRC, a MAC CE, or DCI. For example, the second information may be two bits in the DCI.

In an implementation, the terminal device may further determine, by receiving fourth information, channel sets or channel group sets in the first mode and the third mode. In the codebook-based uplink transmission scenario shown in FIG. 2, when the value of the first information, namely, the bit in the RRC, the MAC CE, or the DCI, being 0 indicates that the transmission mode of the antenna panel on the terminal device is the first mode and the third mode, the terminal device may receive the second information and the fourth information that are sent by the network device and that indicate the channel group sets in the first mode and the third mode, as shown in Table 5.

**Table 5**

| Value of second information | #1 SRI | #2 SRI | Channel group set | Value of second information | #1 SRI | #2 SRI | Channel group set |
|---|---|---|---|---|---|---|---|
| 00 | 0 | 0 | Channel 1 | 10 | 0 | 0 | Channel 1 and channel 2 |
| First mode 1 | | | | Third mode | | | |
| | 1 | 1 | Channel 2 | | 0 | 1 | Channel 1 and channel 4 |
| | 0 | 0 | Channel 3 | | 1 | 0 | Channel 2 and channel 3 |
| | 1 | 1 | Channel 4 | | 1 | 1 | Channel 3 and channel 4 |
| 01 | 0 | 0 | Channel 1 and channel 3 | 11 | | | |
| First mode 2 | | | | | | | |
| | 0 | 1 | Channel 2 and channel 4 | | | | |
| | | | | | | | |
| | | | | | | | |

Refer to Table 5. A first column and a fifth column in Table 5 indicate values of the second information, and the value of the second information may be 2 bits. As shown in Table 5, the values of the second information may be 00, 01, 10, and 11. A second column and a third column in Table 5 are values of two SRI fields respectively, and a sixth column and a seventh column are values of two SRI fields respectively. As shown in Table 5, for each value of the second information, the two SRI fields may have a maximum of four values, which are respectively 00, 01, 11, and 10.

It can be learned from Table 5 that when the second information being the two bits in the DCI indicates one of the first mode and the third mode, a value of the fourth information, namely, two SRI fields in DCI, may indicate the channel group sets in the first mode and the third mode.

As shown in Table 5, when the values of the second information, namely, the two bits in the DCI, are 00 and 01, it indicates that the transmission mode of the antenna panel on the terminal device is the first mode. When the value of the second information is 00, it indicates a sub-mode of the first mode: a first mode 1, and when the value of the second information is 01, it indicates a sub-mode of the first mode: a first mode 2. When the value of the second information, namely, the two bits in the DCI, is 10, it indicates that the transmission mode of the antenna panel on the terminal device is the third mode. When the value of the second information is 11, the four channel group sets herein are in a reserved state.

For example, in the scenario shown in FIG. 2, when the value of the second information, namely, the two bits in the DCI, is 10, a value of one bit in the #1 SRI field in the fourth information is 1, and a value of one bit in the #2 SRI field is 1, the channel group set in the third mode is the channel 3 and the channel 4. In this case, it may be understood that the antenna panel 231 on the terminal device 230 and the antenna panel 232 on the terminal device 230 simultaneously send a same transport block to the network device 220 through the channel 3 and the channel 4 respectively, where the antenna panel 231 and the antenna panel 232 send different parts of the transport block; or that the antenna panel 231 on the terminal device 230 and the antenna panel 232 on the terminal device 230 each simultaneously send one transport block to the network device 220 through the channel 3 and the channel 4 respectively.

It may be understood that, in this implementation, in the two sub-modes of the first mode, the first mode 1 and the first mode 2 indicate the following meanings: The first mode 1 indicates that one antenna panel on the terminal device sends a transport block to the network device through one channel, and the first mode 2 indicates that one antenna panel on the terminal device sends a transport block to the network device through two channels.

In an implementation, based on the communication scenario in Table 5, the terminal device receives the second information and the fourth information that are sent by the network device and that indicate the channel group sets in the first mode and the third mode, as shown in Table 6.

**Table 6**

| Value of second information | #1 SRI | #2 SRI | Channel group set | Value of second information | #1 SRI | #2 SRI | Channel group set |
|---|---|---|---|---|---|---|---|
| 00 | 0 | | Channel 1 | 10 | 0 | 0 | Channel 1 and channel 2 |
| First mode 1 | | | | Third mode | | | |
| | 1 | | Channel 2 | | 0 | 1 | Channel 1 and channel 4 |
| | | | | | 1 | 0 | Channel 2 and channel 3 |
| | | | | | 1 | 1 | Channel 3 and channel 4 |
| 01 | 0 | | Channel 3 | 11 | | | |
| First mode 2 | 1 | | Channel 4 | | | | |
| | | | | | | | |
| | | | | | | | |

It should be understood that different from that in Table 5, in Table 6, when the values of the second information, namely, the two bits in the DCI, are 00 and 01, the channel group set in the first mode may be determined based on a value of one bit of one SRI field in the fourth information, namely, the DCI. In this case, the #2 SRI field in the fourth information, namely, the DCI, is not used. When the value of the second information is 00, it indicates that the channel group set in the first mode is the channel 1 or the channel 2. When the value of the second information is 01, it indicates that the channel group set in the first mode is the channel 3 or the channel 4. In addition, specific processes of determining the channel groups in the first mode and the third mode in Table 6 may be similar to those in Table 5. To avoid repetition, detailed descriptions thereof are omitted herein.

It should be understood that correspondences between the values of the second information, the values of the two SRI fields in the fourth information, and the channel group sets in the first mode and the third mode in Table 5 and Table 6 are examples. This is not limited in this embodiment of this application.

Alternatively, when a value of the bit in the RRC, the MAC CE, or the DCI is 1, it indicates the first mode and the second mode. Optionally, one of the first mode and the second mode may be further indicated by second information. Optionally, a value of the fourth information may further indicate a channel group set in the first mode or the second mode.

FIG. 9 is a block diagram of still another example of a communication method according to an embodiment of this application.

In FIG. 9, first information is one bit. When the first information is a first value, the first information indicates two modes, and the two modes are a first mode and a third mode; or when the first information is a second value, the first information indicates one mode, and the mode is a second mode.

A terminal device receives the first information sent by a network device, where the first information may be one bit in RRC, a MAC CE, or DCI.

When a value of the bit in the RRC, the MAC CE, or the DCI is 0, it indicates the second mode.

In an implementation, a terminal device may determine, by receiving fourth information, a channel group set in the second mode. In the codebook-based uplink transmission scenario shown in FIG. 2, when the value of the first information, namely, the bit in the RRC, the MAC CE, or the DCI, indicates the second mode, the terminal device may receive the fourth information that is sent by the network device and that indicates the channel group set in the third mode, as shown in Table 7. It should be understood that Table 7 shows four channel group sets in the 12 channel group sets in the second mode as examples. This is not limited in this embodiment of this application.

**Table 7**

| Value of fourth information | | Channel group set |
|---|---|---|
| #1 SRI | #2 SRI | |
| 0 | 0 | Channel 1 and channel 4 |
| 0 | 1 | Channel 2 and channel 3 |
| 1 | 0 | Channel 1 and channel 3 |
| 1 | 1 | Channel 2 and channel 4 |

It can be learned from Table 7 that when the first information is one bit in the DCI, and a value of the bit in the DCI being 0 indicate the second mode in the three modes, the channel group set in the second mode may be indicated by a value of the fourth information, namely, two SRI fields in DCI. For example, when the fourth information is the two SRI fields in the DCI, a value of one bit in the #1 SRI in the DCI is 0, and a value of one bit in the #2 SRI in the DCI is 0, it may be understood as that the antenna panel 231 on the terminal device 230 sends one transport block to the network device 210 at a first moment through the channel 1, and the antenna panel 232 on the terminal device 230 sends a same transport block to the network device 220 at a second moment through the channel 4 in the channel group set in the second mode in the scenario shown in FIG. 2, where the first moment is different from the second moment.

It should be understood that a correspondence between the value of the fourth information, namely, the two SRI fields in the DCI, and the channel group set in the second mode in Table 7 is an example. This is not limited in this embodiment of this application.

Alternatively, when a value of the bit in the RRC, the MAC CE, or the DCI is 1, it indicates that a transmission mode of an antenna panel on the terminal device is the first mode and the third mode. Optionally, one of the first mode and the third mode may be indicated by second information. Optionally, a value of fourth information may further indicate a channel group set in the first mode or the third mode.

FIG. 7 to FIG. 9 show a case in which the first information is one bit in a multi-antenna panel scenario. The mode used by the terminal device to send the transport block may be determined by using the first information.

In a possible implementation, the first information may be two bits. In this case, the first information may directly indicate one mode. Optionally, the terminal device may further determine, by receiving fourth information, a channel group set corresponding to each mode.

In the codebook-based uplink transmission scenario shown in FIG. 2, when the first information being the two bits in the DCI indicates that the transmission mode of the antenna panel on the terminal device is the first mode, the second mode, or the third mode, the terminal device may receive the fourth information that is sent by the network device and that indicates the channel group set in the first mode, the second mode, or the third mode, as shown in Table 8. It should be understood that Table 8 shows four of the six channel group sets in the first mode, four of the 12 channel sets in the second mode, and four channel group sets in the third mode as examples. This is not limited in this embodiment of this application.

**Table 8**

| Value of first information | #1 SRI | #2 SRI | Channel group set | Value of first information | #1 SRI | #2 SRI | Channel group set |
|---|---|---|---|---|---|---|---|
| 00 | 0 | 0 | Channel 1 | 10 | 0 | 0 | Channel 1 and channel 4 |
| First mode | | | | Second mode 1 | | | |
| | 0 | 1 | Channel 2 | | 0 | 1 | Channel 1 and channel 3 |
| | 1 | 0 | Channel 3 | | 1 | 0 | Channel 2 and channel 3 |
| | 1 | 1 | Channel 4 | | 1 | 1 | Channel 2 and channel 4 |
| 01 | 0 | 0 | Channel 1 and | 11 | 0 | 0 | Channel 4 and channel 1 |
| Third mode | | | channel 2 | Second mode 2 | | | |
| | 0 | 1 | Channel 1 and channel 4 | | 0 | 1 | Channel 3 and channel 1 |
| | 1 | 0 | Channel 2 and channel 3 | | 1 | 0 | Channel 3 and channel 2 |
| | 1 | 1 | Channel 3 and channel 4 | | 1 | 1 | Channel 4 and channel 2 |

Table 8 is a schematic table in which the first information indicates the first mode, the second mode, or the third mode when the first information is the two bits in embodiments in FIG. 3 to FIG. 6. A first column and a fifth column in Table 8 indicate values of the first information, and the value of the first information may be 2 bits. As shown in Table 8, the values of the first information may be 00, 01, 10, and 11.

It can be learned from Table 8 that, when the first information being the two bits in the DCI indicates one mode in the first mode, the second mode, or the third mode, the channel group set in the first mode, the second mode, or the third mode may be further indicated by a value of the fourth information, namely, two SRI fields in DCI. As shown in Table 8, when the value of the two bits of the first information is 00, it indicates the first mode; when the value of the two bits of the first information is 01, it indicates the third mode; or when the value of the two bits of the first information is 10 and 11, it indicates the second mode. When the value of the first information is 10, it corresponds to a sub-mode of the second mode: a second mode 1, and when the value of the second information is 11, it corresponds to a sub-mode of the second mode: a second mode 2. It should be understood that Table 8 shows the eight channel group sets in the 12 channel group sets in the second mode as examples. This is not limited in this embodiment of this application.

For example, in the scenario shown in FIG. 2, when the value of the first information, namely, the two bits in the DCI, is 11, a value of one bit in the #1 SRI field in the fourth information, namely, the DCI, is 0, and a value of one bit in the #2 SRI field is 1, the channel group set in the second mode indicated by the fourth information is the channel 2 and the channel 4. In this case, it may be understood that the antenna panel 232 on the terminal device 230 sends a transport block to the network device 210 at a first moment through the channel 2, and the antenna panel 232 on the terminal device 230 sends a same transport block to the network device 220 at a second moment through the channel 4, where the first moment is different from the second moment.

In the example in Table 8, the second mode includes the two sub-modes: the second mode 1 and the second mode 2. The second mode 1 includes four channel group sets. The terminal device 230 first sends a transport block to the network device 210, and then sends a transport block to the network device 220 in the four channel group sets. The second mode 2 includes four channel group sets. The terminal device 230 first sends a transport block to the network device 220, and then sends a transport block to the network device 210 in the four channel group sets. Therefore, the first mode 1 and the second mode 2 respectively represent a sequence in which the terminal device sends the transport blocks to the network devices.

In an implementation, based on the communication scenario in Table 8, the terminal device receives the fourth information that is sent by the network device and that indicates the channel group set in the first mode, the second mode, or the third mode, as shown in Table 9.

**Table 9**

| Value of first information | #1 SRI | #2 SRI | Channel group set | Value of first information | #1 SRI | #2 SRI | Channel group set |
|---|---|---|---|---|---|---|---|
| 00 | 0 | 0 | Channel 1 | 10 | 0 | 0 | Channel 1 and channel 4 |
| First mode | | | | Second mode 1 | | | |
| | 0 | 1 | Channel 2 | | 0 | 1 | Channel 1 and channel 3 |
| | 1 | 0 | Channel 3 | | 1 | 0 | Channel 2 and channel 3 |
| | 1 | 1 | Channel 4 | | 1 | 1 | Channel 2 and channel 4 |
| 01 | 0 | 0 | Channel 1 and | 11 | 0 | 0 | Channel 1 and channel 2 |
| Third mode | | | channel 2 | Second mode 3 | | | |
| | 0 | 1 | Channel 1 and channel 4 | | 0 | 1 | Channel 3 and channel 4 |
| | 1 | 0 | Channel 2 and channel 3 | | 1 | 0 | Channel 2 and channel 1 |
| | 1 | 1 | Channel 3 and channel 4 | | 1 | 1 | Channel 4 and channel 3 |

It should be understood that, channel group sets included in two sub-modes of the second mode in Table 9 are different from those in Table 8. The second mode in Table 9 includes the two sub-modes: a second mode 1 and a second mode 3. The second mode 3 includes four channel group sets, and the antenna panel 231 and the antenna panel 232 on the terminal device 230 sequentially sends transport blocks to the network device 210, or sequentially sends transport blocks to the network device 220 in the four channel group sets.

In an implementation, based on the communication scenario in Table 9, the terminal device receives the fourth information that is sent by the network device and that indicates the channel group set in the first mode, the second mode, or the third mode, as shown in Table 10.

**Table 10**

| Value of first information | #1 SRI | #2 SRI | Channel group set | Value of first information | #1 SRI | #2 SRI | Channel group set |
|---|---|---|---|---|---|---|---|
| 00 | 0 | 0 | Channel 1 | 10 | 0 | 0 | Channel 1 and channel 4 |
| First mode | | | | Second mode 1 | | | |
| | 0 | 1 | Channel 2 | | 0 | 1 | Channel 1 and channel 3 |
| | 1 | 0 | Channel 1 and channel 3 | | 1 | 0 | Channel 2 and channel 3 |
| | 1 | 1 | Channel 2 and channel 4 | | 1 | 1 | Channel 2 and channel 4 |
| 01 | 0 | 0 | Channel 1 and | 11 | 0 | 0 | Channel 1 and channel 2 |
| Third mode | | | channel 2 | Second mode 3 | | | |
| | 0 | 1 | Channel 1 and channel 4 | | 0 | 1 | Channel 3 and channel 4 |
| | 1 | 0 | Channel 2 and channel 3 | | 1 | 0 | Channel 2 and channel 1 |
| | 1 | 1 | Channel 3 and channel 4 | | 1 | 1 | Channel 4 and channel 3 |

It should be understood that, channel group sets included in the first mode in Table 10 are different from those in Table 9.

It should be further understood that correspondences between the values of the first information, the values of the two SRI fields in the fourth information, and the channel groups in the first mode, the second mode, and the third mode in Table 8 to Table 10 are examples. This is not limited in this embodiment of this application.

In an optional implementation, in technical solutions in Table 8 to Table 10, when the first information is the two bits, whether the mode indicated by the first information is the first mode, the second mode, or the third mode may be determined by determining a value set to which the value of the first information belongs.

For example, in Table 8, a first value set may be defined as {00}. In other words, the first value set includes a value, and the value is 00. When the value of the first information is 00, it is considered that the value of the first information belongs to the first value set. In this case, the first information indicates the first mode. The terminal device may determine one mode based on the first information, and the mode is the first mode, so that the terminal device sends the transport block in the first mode.

In Table 8, a second value set may be defined as {10, 11}. In other words, the second value set includes two values, and the two values are 10 and 11. When the value of the first information is 10 or 11, it is considered that the value of the first information belongs to the second value set. In this case, the first information indicates the second mode. The terminal device may determine one mode based on the first information, and the mode is the second mode, so that the terminal device sends the transport block in the second mode.

In Table 8, a second value set may be defined as {01}. In other words, the second value set includes a value, and the value is 01. When the value of the first information is 01, it is considered that the value of the first information belongs to the third value set. In this case, the first information indicates the third mode. The terminal device may determine one mode based on the first information, and the mode is the third mode, so that the terminal device sends the transport block in the third mode.

For Table 9 and Table 10, details are not described herein by using examples. It may be understood that in Table 9 and Table 10, a first value set, a second value set, and a third value set are merely examples for description. This is not limited in embodiments of this application.

According to technical solutions in Table 9 and Table 10, the two bits configured in the DCI may be used as the first information to specifically indicate one mode of the first mode, the second mode, or the third mode. In addition, the channel group set in each transmission mode is further determined based on the values of the two SRI fields in the received fourth information sent by the network device. This resolves, without increasing bit overheads, a problem of indicating the transmission mode of the multi-antenna panel at the terminal device side.

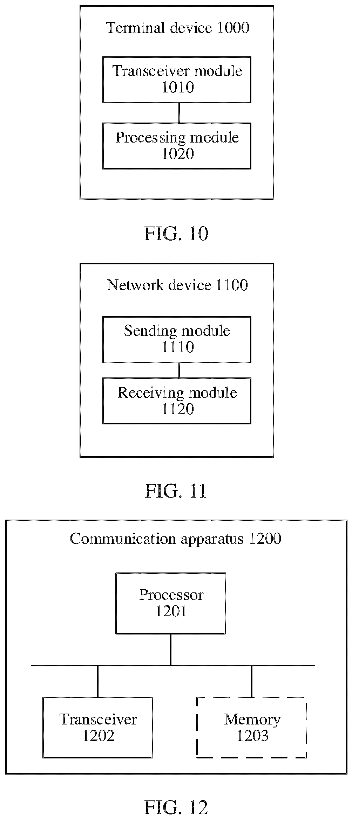

In this application, an example in which a communication apparatus is the terminal device in the foregoing method embodiments is used. FIG. 10 is a diagram of a structure of a terminal device 1000. The terminal device 1000 may include a transceiver module 1010 and a processing module 1020.

In some embodiments, the terminal device 1000 may further include a storage module (not shown in FIG. 10), configured to store program instructions and data.

In some embodiments, the transceiver module 1010 may also be referred to as a transceiver unit, configured to implement a sending function and/or a receiving function. The transceiver module 1010 may include a transceiver circuit, a transceiver machine, a transceiver, or a communication interface.

In some embodiments, the transceiver module 1010 may include a receiving module and a sending module, respectively configured to perform receiving steps and sending steps performed by the terminal device in the foregoing method embodiments, and/or configured to support other processes of the technologies described in this specification. The processing module 1020 may be configured to perform processing steps performed by the terminal device in the foregoing method embodiments, and/or configured to support other processes of the technologies described in this specification.

In a possible implementation,
the transceiver module 1010 is configured to receive first information;
the processing module 1020 is configured to determine N modes from M modes based on the first information, where N is an integer greater than 0, and M is an integer greater than or equal to N;
the M modes include one or more of a first mode, a second mode, and a third mode;
the first mode is sending a transport block via one antenna panel;
the second mode is sending same transport blocks at at least two moments via at least one antenna panel, and the transport block is sent at each of the at least two moments via one antenna panel;
the third mode is sending a same transport block simultaneously via at least two antenna panels, and different antenna panels send different parts of the transport block, or the third mode is sending one transport block simultaneously via each of at least two antenna panels; and
the transceiver module 1010 is further configured to send a transport block in one of the N modes.

Optionally, when M=3, that the processing module 1020 is configured to determine the N modes from the M modes based on the first information includes: The first information indicates the N modes; and when a value of the first information is a first value, N=2, and the first information indicates the first mode and the second mode; or when a value of the first information is a second value, N=1, and the first information indicates the third mode; or when a value of the first information is a first value, N=2, and the first information indicates the first mode and the second mode; or when a value of the first information is a second value, N=2, and the first information indicates the first mode and the third mode; or when a value of the first information is a first value, N=2, and the first information indicates the first mode and the third mode; or when a value of the first information is a second value, N=1, and the first information indicates the second mode.

Optionally, when N=2, the transceiver module 1010 is further configured to: receive second information, where the second information indicates one of the N modes; and the processing module 1020 is configured to send the transport block in the mode indicated by the second information. The first information is one bit in radio resource control RRC, a media access control control element MAC CE, or downlink control information DCI. The second information is at least one bit in RRC, a MAC CE, or DCI.

Optionally, when N=1, that the processing module 1020 is further configured to determine the N modes from the M modes based on the first information includes: If a value of the first information belongs to a first value set, determining the first mode from the M modes based on the first information, where the first value set includes at least one value; or if a value of the first information belongs to a second value set, determining the second mode from the M modes based on the first information, where the second value set includes at least one value; or if a value of the first information belongs to a third value set, determining the third mode from the M modes based on the first information, where the third value set includes at least one value. The first information is at least two bits in RRC, a MAC CE, or DCI.

Optionally, the transceiver module 1010 is further configured to receive third information before receiving the first information, and the third information indicates whether the M modes include the third mode.

Specifically, the third information includes a first field; and when a value of the first field is a third value, the third information indicates that the M modes include the third mode; or when a value of the first field is a fourth value, the third information indicates that the M modes do not include the third mode.

In an implementation, when the third information includes a first field, the third information indicates that the M modes include the third mode, or when the third information does not include a first field, the third information indicates that the M modes do not include the third mode; or when the third information includes a first field, the third information indicates that the M modes do not include the third mode, or when the third information does not include a first field, the third information indicates that the M modes include the third mode. The first field is one field in RRC, a MAC CE, or DCI.

All related content of the steps in the foregoing method embodiments may be cited in function descriptions of the corresponding functional modules. Details are not described herein again.

In this application, the terminal device 1000 is presented in a form of the functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, when the terminal device 1000 in FIG. 10 is a chip or a chip system, functions/implementation processes of the transceiver module 1010 and the processing module 1020 may be implemented through an input/output interface (or a communication interface) of the chip or the chip system.

Because the terminal device 1000 provided in this embodiment may perform the foregoing methods, for technical effect that can be obtained by the terminal device, refer to the foregoing method embodiments. Details are not described herein again.

In this application, an example in which a communication apparatus is the network device in the foregoing method embodiments is used. FIG. 11 is a block diagram of the communication apparatus according to an embodiment of this application. As shown in FIG. 11, the communication apparatus 1100 may include a sending module 1110 and a receiving module 1120.

In some embodiments, the network device 1100 may further include a storage module (not shown in FIG. 11), configured to store program instructions and data.

In some embodiments, the receiving module 1120 and the sending module 1110 are respectively configured to perform receiving and sending steps performed by the network device in the foregoing method embodiments, and/or configured to support other processes of the technologies described in this specification.

In an implementation,
the sending module 1110 is configured to send first information, where the first information is used to determine N modes from M modes, N is an integer greater than 0, and M is an integer greater than or equal to N; the M modes include one or more of a first mode, a second mode, and a third mode; the first mode is sending a transport block via one antenna panel; the second mode is sending same transport blocks at at least two moments via at least one antenna panel, and the transport block is sent at each of the at least two moments via one antenna panel; and the third mode is sending a same transport block simultaneously via at least two antenna panels, and different antenna panels send different parts of the transport block, or the third mode is sending one transport block simultaneously via each of at least two antenna panels; and
the receiving module 1120 is configured to receive a transport block in one of the N modes.

Optionally, when M=3, that the first information is used to determine the N modes from the M modes includes: The first information indicates the N modes; and when a value of the first information is a first value, N=2, and the first information indicates the first mode and the second mode; or when a value of the first information is a second value, N=1, and the first information indicates the third mode; or when a value of the first information is a first value, N=2, and the first information indicates the first mode and the second mode; or when a value of the first information is a second value, N=2, and the first information indicates the first mode and the third mode; or when a value of the first information is a first value, N=2, and the first information indicates the first mode and the third mode; or when a value of the first information is a second value, N=1, and the first information indicates the second mode.

Optionally, when N=2, the sending module 1110 is further configured to: send second information, where the second information indicates one of the N modes; and the receiving module 1120 is configured to receive the transport block in the mode indicated by the second information. The first information is one bit in radio resource control RRC, a media access control control element MAC CE, or downlink control information DCI. The second information is at least one bit in RRC, a MAC CE, or DCI.

Optionally, when N=1, that the first information is used to determine the N modes from the M modes includes: If a value of the first information belongs to a first value set, the first information indicates the first mode from the M modes, and the first value set includes at least one value; or if a value of the first information belongs to a second value set, the first information indicates the second mode from the M modes, and the second value set includes at least one value; or if a value of the first information belongs to a third value set, the first information indicates the third mode from the M modes, and the third value set includes at least one value. The first information is at least two bits in RRC, a MAC CE, or DCI.

In an implementation, the sending module 1110 is configured to send third information before sending the first information, where the third information indicates whether the M modes include the third mode.

Optionally, the third information includes a first field; and when a value of the first field is a third value, the third information indicates that the M modes include the third mode; or when a value of the first field is a fourth value, the third information indicates that the M modes do not include the third mode.

In an implementation, when the third information includes a first field, the third information indicates that the M modes include the third mode, or when the third information does not include a first field, the third information indicates that the M modes do not include the third mode; or when the third information includes a first field, the third information indicates that the M modes do not include the third mode, or when the third information does not include a first field, the third information indicates that the M modes include the third mode. The first field is one field in RRC, a MAC CE, or DCI.

All related content of the steps in the foregoing method embodiments may be cited in function descriptions of the corresponding functional modules. Details are not described herein again.

In this application, the network device 1100 is presented in a form of the functional modules obtained through division in an integrated manner. The "module" herein may be an application-specific integrated circuit, a circuit, a processor and a memory that execute one or more software or firmware programs, an integrated logic circuit, and/or another component that can provide the foregoing functions.

In some embodiments, when the network device 1100 in FIG. 11 is a chip or a chip system, functions/implementation processes of the processing module 1010 may be implemented by using a processor (or a processing circuit) of the chip or the chip system, and functions/implementation processes of the sending module 1020 may be implemented through an input/output interface (or a communication interface) of the chip or the chip system.

Because the network device 1100 provided in this embodiment may perform the foregoing methods, for technical effect that can be obtained by the network device, refer to the foregoing method embodiments. Details are not described herein again.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not be in a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

In some embodiments, an embodiment of this application further provides a communication apparatus. The communication apparatus includes an interface circuit and a logic circuit. The interface circuit is configured to input and/or output information. The logic circuit is configured to perform the method in any one of the foregoing method embodiments, and process and/or generate output information based on an input.

In a possible product form, the terminal device and the network device in embodiments of this application may be implemented by using one or more field programmable gate arrays (field programmable gate arrays, FPGAs), a programmable logic device (programmable logic devices, PLDs), a controller, a state machine, a gate logic, a discrete hardware component, any other appropriate circuit, or any combination of circuits that can perform various functions described in this application.

In another possible product form, the network device and the terminal device in embodiments of this application may be implemented in a general bus architecture. FIG. 12 is a diagram of a structure of a communication apparatus 1200 according to an embodiment of this application. The communication apparatus 1200 includes a processor 1201 and a transceiver 1202. The communication apparatus 1200 may be a network device or a terminal device, or a chip in the network device or the terminal device. FIG. 12 shows only main components of the communication apparatus 1200. In addition to the processor 1201 and the transceiver 1202, the communication apparatus may further include a memory 1203 and an input/output apparatus (not shown in the FIG. 12).

The processor 1201 is mainly configured to: process a communication protocol and communication data, control the entire communication apparatus, execute a software program, and process data of the software program. The memory 1203 is mainly configured to store the software program and data. The transceiver 1202 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, like a touchscreen, a display, or a keyboard, is mainly configured to: receive data input by a user and output data to the user.

The processor 1201, the transceiver 1202, and the memory 1203 may be connected through a communication bus.

After the communication apparatus is powered on, the processor 1201 may read the software program in the memory 1203, interpret and execute instructions of the software program, and process the data of the software program. When data needs to be sent wirelessly, the processor 1201 performs baseband processing on the to-be-sent data, and then outputs a baseband signal to the radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1201. The processor 1201 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but are not limited to a radio channel, and various other media that can store, include, and/or carry instructions and/or data.

An embodiment of this application further provides a communication system, including the foregoing terminal device and the foregoing network device.

This application further provides a computer program product including instructions. When the computer program product runs on a computer, a function of any one of the foregoing method embodiments is implemented.

This application further provides a chip, including a processor. The processor is configured to read a computer program stored in a memory and run the computer program, to perform corresponding operations and/or procedures performed by the terminal device in the information indication method provided in this application. Optionally, the chip further includes the memory, the memory and the processor are connected to the memory over a circuit or a wire, and the processor is configured to read and execute the computer program in the memory. Further, optionally, the chip further includes a communication interface, and the processor is connected to the communication interface. The communication interface is configured to receive data and/or information to be processed, and the processor obtains the data and/or information from the communication interface and processes the data and/or information. The communication interface may be an input/output interface, an interface circuit, an output circuit, an input circuit, a pin, a related circuit, or the like on the chip. The processor may alternatively be embodied as a processing circuit or a logic circuit.

This application further provides a chip, including a processor. The processor is configured to read a computer program stored in a memory and run the computer program, to perform corresponding operations and/or procedures performed by the network device in the information indication method provided in this application. Optionally, the chip further includes the memory, the memory and the processor are connected to the memory over a circuit or a wire, and the processor is configured to read and execute the computer program in the memory. Further, optionally, the chip further includes a communication interface, and the processor is connected to the communication interface. The communication interface is configured to receive data and/or information to be processed, and the processor obtains the data and/or information from the communication interface and processes the data and/or information. The communication interface may be an input/output interface, an interface circuit, an output circuit, an input circuit, a pin, a related circuit, or the like on the chip. The processor may alternatively be embodied as a processing circuit or a logic circuit.

The chip may alternatively be replaced by a chip system, and details are not described herein.

The terms "include", "contain" and any other variants thereof in this application are intended to cover non-exclusive inclusion. For example, a process, method, system, product, or device that includes a series of steps or units is not limited to those steps or units that are clearly listed, but may include other steps or units that are not explicitly listed or are inherent to such a process, method, product, or device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual conditions to achieve the objectives of the solutions in embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The term "and/or" in this application describes only an association relationship for describing associated objects and represents that three relationships may exist. For example, A and/or B may represent the following three cases: Only A exists, both A and B exist, and only B exists. In addition, the character "/" in this specification usually represents an "or" relationship between associated objects. In this application, the term "at least one" may represent "one" or "two or more". For example, at least one of A, B, and C may represent the following seventh cases: Only A exists, only B exists, only C exists, both A and B exist, both A and C exist, and both C and B exist, and A, B, C all exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving first information, and determining N modes from M modes based on the first information, wherein N is an integer greater than 0, and M is an integer greater than or equal to N;
the M modes comprise one or more of a first mode, a second mode, and a third mode;
the first mode is sending a transport block via one antenna panel;
the second mode is sending same transport blocks at at least two moments via at least one antenna panel, and the transport block is sent at each of the at least two moments via one antenna panel; and
the third mode is sending a same transport block simultaneously via at least two antenna panels, and different antenna panels send different parts of the transport block, or the third mode is sending one transport block simultaneously via each of at least two antenna panels; and
sending a transport block in one of the N modes.

2. The method according to claim 1, wherein when M=3, the determining N modes from M modes based on the first information comprises: the first information indicates the N modes; and
when a value of the first information is a first value, N=2, and the first information indicates the first mode and the second mode; or when a value of the first information is a second value, N=1, and the first information indicates the third mode; or
when a value of the first information is a first value, N=2, and the first information indicates the first mode and the second mode; or when a value of the first information is a second value, N=2, and the first information indicates the first mode and the third mode; or
when a value of the first information is a first value, N=2, and the first information indicates the first mode and the third mode; or when a value of the first information is a second value, N=1, and the first information indicates the second mode.

3. The method according to claim 1 or 2, wherein when N=2, the method further comprises:
receiving second information, wherein the second information indicates one of the N modes;
the sending a transport block in the N modes comprises:
sending the transport block in the mode indicated by the second information.

4. The method according to claim 3, wherein the second information is at least one bit in radio resource control RRC, a media access control control element MAC CE, or downlink control information DCI.

5. The method according to any one of claims 1 to 4, wherein the first information is one bit in RRC, a MAC CE, or DCI.

6. The method according to claim 1, wherein when N=1, the determining N modes from M modes based on the first information comprises:
if a value of the first information belongs to a first value set, determining the first mode from the M modes based on the first information, wherein the first value set comprises at least one value; or
if a value of the first information belongs to a second value set, determining the second mode from the M modes based on the first information, wherein the second value set comprises at least one value; or
if a value of the first information belongs to a third value set, determining the third mode from the M modes based on the first information, wherein the third value set comprises at least one value.

7. The method according to claim 6, wherein the first information is at least two bits in RRC, a MAC CE, or DCI.

8. The method according to any one of claims 1 to 7, wherein before the receiving first information, the method further comprises:
receiving third information, wherein the third information indicates whether the M modes comprise the third mode.

9. The method according to claim 8, wherein the third information comprises a first field; and
when a value of the first field is a third value, the third information indicates that the M modes comprise the third mode; or
when a value of the first field is a fourth value, the third information indicates that the M modes do not comprise the third mode.

10. The method according to claim 8, wherein
when the third information comprises a first field, the third information indicates that the M modes comprise the third mode, or when the third information does not comprise a first field, the third information indicates that the M modes do not comprise the third mode; or
when the third information comprises a first field, the third information indicates that the M modes do not comprise the third mode, or when the third information does not comprise a first field, the third information indicates that the M modes comprise the third mode.

11. The method according to claim 9 or 10, wherein the first field is one field in RRC, a MAC CE, or DCI.

12. A communication method, wherein the method comprises:
sending first information, wherein the first information is used to determine N modes from M modes, N is an integer greater than 0, and M is an integer greater than or equal to N;
the M modes comprise one or more of a first mode, a second mode, and a third mode;
the first mode is sending a transport block via one antenna panel;
the second mode is sending same transport blocks at at least two moments via at least one antenna panel, and the transport block is sent at each of the at least two moments via one antenna panel; and
the third mode is sending a same transport block simultaneously via at least two antenna panels, and different antenna panels send different parts of the transport block, or the third mode is sending one transport block simultaneously via each of at least two antenna panels; and
receiving a transport block in one of the N modes.

13. The method according to claim 12, wherein when M=3, that the first information is used to determine the N modes from the M modes comprises: the first information indicates the N modes; and
when a value of the first information is a first value, N=2, and the first information indicates the first mode and the second mode; or when a value of the first information is a second value, N=1, and the first information indicates the third mode; or
when a value of the first information is a first value, N=2, and the first information indicates the first mode and the second mode; or when a value of the first information is a second value, N=2, and the first information indicates the first mode and the third mode; or
when a value of the first information is a first value, N=2, and the first information indicates the first mode and the third mode; or when a value of the first information is a second value, N=1, and the first information indicates the second mode.

14. The method according to claim 12 or 13, wherein when N=2, the method further comprises:
sending second information, wherein the second information indicates one of the N modes; and
the receiving a transport block in the N modes comprises:
receiving the transport block in the mode indicated by the second information.

15. The method according to claim 14, wherein the second information is at least one bit in radio resource control RRC, a media access control control element MAC CE, or downlink control information DCI.

16. The method according to any one of claims 12 to 15, wherein the first information is one bit in RRC, a MAC CE, or DCI.

17. The method according to claim 12, wherein when N=1, that the first information is used to determine the N modes from the M modes comprises:
if a value of the first information belongs to a first value set, the first information indicates the first mode from the M modes, and the first value set comprises at least one value; or
if a value of the first information belongs to a second value set, the first information indicates the second mode from the M modes, and the second value set comprises at least one value; or
if a value of the first information belongs to a third value set, the first information indicates the third mode from the M modes, and the third value set comprises at least one value.

18. The method according to claim 17, wherein the first information is at least two bits in RRC, a MAC CE, or DCI.

19. The method according to any one of claims 12 to 18, wherein before the sending first information, the method further comprises:
sending third information, wherein the third information indicates whether the M modes comprise the third mode.

20. The method according to claim 19, wherein the third information comprises a first field; and
when a value of the first field is a third value, the third information indicates that the M modes comprise the third mode; or
when a value of the first field is a fourth value, the third information indicates that the M modes do not comprise the third mode.

21. The method according to claim 19, wherein
when the third information comprises a first field, the third information indicates that the M modes comprise the third mode, or when the third information does not comprise a first field, the third information indicates that the M modes do not comprise the third mode; or
when the third information comprises a first field, the third information indicates that the M modes do not comprise the third mode, or when the third information does not comprise a first field, the third information indicates that the M modes comprise the third mode.

22. The method according to claim 20 or 21, wherein the first field is one field in RRC, a MAC CE, or DCI.

23. A communication method, wherein the method comprises:
receiving first information, and determining one mode or N modes based on the first information, wherein the one mode is one of M modes, the N modes are N modes of the M modes, N is an integer greater than 1, and M is an integer greater than or equal to N;
the M modes comprise at least one or more of a first mode, a second mode, and a third mode;
the first mode is sending a transport block via one antenna panel;
the second mode is sending same transport blocks at at least two moments via at least one antenna panel, and the transport block is sent at each of the at least two moments via one antenna panel; and
the third mode is sending a same transport block simultaneously via at least two antenna panels, and different antenna panels send different parts of the transport block, or the third mode is sending one transport block simultaneously via each of at least two antenna panels; and
sending a transport block in the one mode or one of the N modes.

24. The method according to claim 23, wherein when M=3, and N=2, the determining one mode or N modes based on the first information comprises:
when a value of the first information is a first value, the first information indicates two modes, and the two modes are the first mode and the second mode; or when a value of the first information is a second value, the first information indicates one mode, and the mode is the third mode; or
when a value of the first information is a first value, the first information indicates two modes, and the two modes are the first mode and the second mode; or when a value of the first information is a second value, the first information indicates two modes, and the two modes are the first mode and the third mode; or
when a value of the first information is a first value, the first information indicates two modes, and the two modes are the first mode and the third mode; or when a value of the first information is a second value, the first information indicates one mode, and the mode is the second mode.

25. The method according to claim 23 or 24, wherein when N=2, the method further comprises:
receiving second information, wherein the second information indicates one of the N modes.

26. The method according to claim 25, wherein the second information is at least one bit in radio resource control RRC, a media access control control element MAC CE, or downlink control information DCI.

27. The method according to any one of claims 23 to 26, wherein the first information is at least one bit in RRC, a MAC CE, or DCI.

28. The method according to claim 23, wherein the one mode is determined from the M modes based on the first information; and
if a value of the first information belongs to a first value set, the first information indicates that the mode is the first mode, and the first value set comprises at least one value; or
if a value of the first information belongs to a second value set, the first information indicates that the mode is the second mode, and the second value set comprises at least one value; or
if a value of the first information belongs to a third value set, the first information indicates that the mode is the third mode, and the third value set comprises at least one value.

29. The method according to claim 28, wherein the first information is at least two bits in RRC, a MAC CE, or DCI.

30. The method according to any one of claims 23 to 29, wherein before the receiving first information, the method further comprises:
receiving third information, wherein the third information indicates whether the M modes comprise the third mode.

31. The method according to claim 30, wherein the third information comprises a first field; and
when a value of the first field is a third value, the third information indicates that the M modes comprise the third mode; or
when a value of the first field is a fourth value, the third information indicates that the M modes do not comprise the third mode.

32. The method according to claim 30, wherein
when the third information comprises a first field, the third information indicates that the M modes comprise the third mode, or when the third information does not comprise a first field, the third information indicates that the M modes do not comprise the third mode; or
when the third information comprises a first field, the third information indicates that the M modes do not comprise the third mode, or when the third information does not comprise a first field, the third information indicates that the M modes comprise the third mode.

33. The method according to claim 31 or 32, wherein the first field is one field in RRC, a MAC CE, or DCI.

34. A communication method, wherein the method comprises:
sending first information, wherein the first information is used to determine one mode or N modes, the one mode is one of M modes, the N modes are N modes of the M modes, N is an integer greater than 1, and M is an integer greater than or equal to N;
the M modes comprise one or more of a first mode, a second mode, and a third mode;
the first mode is sending a transport block via one antenna panel;
the second mode is sending same transport blocks at at least two moments via at least one antenna panel, and the transport block is sent at each of the at least two moments via one antenna panel; and
the third mode is sending a same transport block simultaneously via at least two antenna panels, and different antenna panels send different parts of the transport block, or the third mode is sending one transport block simultaneously via each of at least two antenna panels; and
receiving a transport block in the one mode or one of the N modes.

35. The method according to claim 34, wherein when M=3, and N=2, that the first information is used to determine the one mode or N modes comprises:
when a value of the first information is a first value, the first information indicates two modes, and the two modes are the first mode and the second mode; or when a value of the first information is a second value, the first information indicates one mode, and the mode is the third mode; or
when a value of the first information is a first value, the first information indicates two modes, and the two modes are the first mode and the second mode; or when a value of the first information is a second value, the first information indicates two modes, and the two modes are the first mode and the third mode; or
when a value of the first information is a first value, the first information indicates two modes, and the two modes are the first mode and the third mode; or when a value of the first information is a second value, the first information indicates one mode, and the mode is the second mode.

36. The method according to claim 34 or 35, wherein when N=2, the method further comprises:
sending second information, wherein the second information indicates one of the N modes.

37. The method according to claim 36, wherein the second information is at least one bit in radio resource control RRC, a media access control control element MAC CE, or downlink control information DCI.

38. The method according to any one of claims 34 to 37, wherein the first information is one bit in RRC, a MAC CE, or DCI.

39. The method according to claim 34, wherein that the first information is used to determine the one mode from the M modes comprises:
if a value of the first information belongs to a first value set, the first information indicates that the mode is the first mode, and the first value set comprises at least one value; or
if a value of the first information belongs to a second value set, the first information indicates that the mode is the second mode, and the second value set comprises at least one value; or
if a value of the first information belongs to a third value set, the first information indicates that the mode is the third mode, and the third value set comprises at least one value.

40. The method according to claim 39, wherein the first information is at least two bits in RRC, a MAC CE, or DCI.

41. The method according to any one of claims 34 to 40, wherein before the sending first information, the method further comprises:
sending third information, wherein the third information indicates whether the M modes comprise the third mode.

42. The method according to claim 41, wherein the third information comprises a first field; and
when a value of the first field is a third value, the third information indicates that the M modes comprise the third mode; or
when a value of the first field is a fourth value, the third information indicates that the M modes do not comprise the third mode.

43. The method according to claim 41, wherein
when the third information comprises a first field, the third information indicates that the M modes comprise the third mode, or when the third information does not comprise a first field, the third information indicates that the M modes do not comprise the third mode; or
when the third information comprises a first field, the third information indicates that the M modes do not comprise the third mode, or when the third information does not comprise a first field, the third information indicates that the M modes comprise the third mode.

44. The method according to claim 42 or 43, wherein the first field is one field in RRC, a MAC CE, or DCI.

45. A communication apparatus, comprising:
a receiving module, configured to receive first information;
a processing module, configured to determine N modes from M modes based on the first information, wherein N is an integer greater than 0, and M is an integer greater than or equal to N;
the M modes comprise one or more of a first mode, a second mode, and a third mode;
the first mode is sending a transport block via one antenna panel;
the second mode is sending same transport blocks at at least two moments via at least one antenna panel, and the transport block is sent at each of the at least two moments via one antenna panel; and
the third mode is sending a same transport block simultaneously via at least two antenna panels, and different antenna panels send different parts of the transport block, or the third mode is sending one transport block simultaneously via each of at least two antenna panels; and
a sending module, configured to send a transport block in one of the N modes.

46. The apparatus according to claim 45, wherein when M=3, that the processing module is configured to determine the N modes from the M modes based on the first information comprises: the first information indicates the N modes; and
when a value of the first information is a first value, N=2, and the first information indicates the first mode and the second mode; or when a value of the first information is a second value, N=1, and the first information indicates the third mode; or
when a value of the first information is a first value, N=2, and the first information indicates the first mode and the second mode; or when a value of the first information is a second value, N=2, and the first information indicates the first mode and the third mode; or
when a value of the first information is a first value, N=2, and the first information indicates the first mode and the third mode; or when a value of the first information is a second value, N=1, and the first information indicates the second mode.

47. The apparatus according to claim 45 or 46, wherein when N=2, the receiving module is further configured to:
receive second information, wherein the second information indicates one of the N modes; and
the processing module is configured to send the transport block in the mode indicated by the second information.

48. The apparatus according to claim 47, wherein the second information is at least one bit in radio resource control RRC, a media access control control element MAC CE, or downlink control information DCI.

49. The apparatus according to any one of claims 45 to 48, wherein the first information is one bit in RRC, a MAC CE, or DCI.

50. The apparatus according to claim 45, wherein when N=1, that the processing module is configured to determine the N modes from the M modes based on the first information comprises:
if a value of the first information belongs to a first value set, determining the first mode from the M modes based on the first information, wherein the first value set comprises at least one value; or
if a value of the first information belongs to a second value set, determining the second mode from the M modes based on the first information, wherein the second value set comprises at least one value; or
if a value of the first information belongs to a third value set, determining the third mode from the M modes based on the first information, wherein the third value set comprises at least one value.

51. The apparatus according to claim 50, wherein the first information is at least two bits in RRC, a MAC CE, or DCI.

52. The apparatus according to any one of claims 45 to 51, wherein the receiving module is further configured to receive third information before receiving the first information, and the third information indicates whether the M modes comprise the third mode.

53. The apparatus according to claim 52, wherein the third information comprises a first field; and
when a value of the first field is a third value, the third information indicates that the M modes comprise the third mode; or
when a value of the first field is a fourth value, the third information indicates that the M modes do not comprise the third mode.

54. The apparatus according to claim 52, wherein
when the third information comprises a first field, the third information indicates that the M modes comprise the third mode, or when the third information does not comprise a first field, the third information indicates that the M modes do not comprise the third mode; or
when the third information comprises a first field, the third information indicates that the M modes do not comprise the third mode, or when the third information does not comprise a first field, the third information indicates that the M modes comprise the third mode.

55. The apparatus according to claim 53 or 54, wherein the first field is one field in RRC, a MAC CE, or DCI.

56. A communication apparatus, comprising:
a sending module, configured to send first information, wherein the first information is used to determine N modes from M modes, N is an integer greater than 0, and M is an integer greater than or equal to N;
the M modes comprise one or more of a first mode, a second mode, and a third mode;
the first mode is sending a transport block via one antenna panel;
the second mode is sending same transport blocks at at least two moments via at least one antenna panel, and the transport block is sent at each of the at least two moments via one antenna panel; and
the third mode is sending a same transport block simultaneously via at least two antenna panels, and different antenna panels send different parts of the transport block, or the third mode is sending one transport block simultaneously via each of at least two antenna panels; and
a receiving module, configured to receive a transport block in one of the N modes.

57. The apparatus according to claim 56, wherein when M=3, that the first information is used to determine the N modes from the M modes comprises: the first information indicates the N modes; and
when a value of the first information is a first value, N=2, and the first information indicates the first mode and the second mode; or when a value of the first information is a second value, N=1, and the first information indicates the third mode; or
when a value of the first information is a first value, N=2, and the first information indicates the first mode and the second mode; or when a value of the first information is a second value, N=2, and the first information indicates the first mode and the third mode; or
when a value of the first information is a first value, N=2, and the first information indicates the first mode and the third mode; or when a value of the first information is a second value, N=1, and the first information indicates the second mode.

58. The apparatus according to claim 56 or 57, wherein when N=2, the sending module is further configured to:
send second information, wherein the second information indicates one of the N modes; and
the receiving module is configured to receive the transport block in the mode indicated by the second information.

59. The apparatus according to claim 58, wherein the second information is at least one bit in radio resource control RRC, a media access control control element MAC CE, or downlink control information DCI.

60. The apparatus according to any one of claims 56 to 59, wherein the first information is one bit in RRC, a MAC CE, or DCI.

61. The apparatus according to claim 56, wherein when N=1, that the first information is used to determine the N modes from the M modes comprises:
if a value of the first information belongs to a first value set, the first information indicates the first mode from the M modes, and the first value set comprises at least one value; or
if a value of the first information belongs to a second value set, the first information indicates the second mode from the M modes, and the second value set comprises at least one value; or
if a value of the first information belongs to a third value set, the first information indicates the third mode from the M modes, and the third value set comprises at least one value.

62. The apparatus according to claim 61, wherein the first information is at least two bits in RRC, a MAC CE, or DCI.

63. The apparatus according to any one of claims 56 to 62, wherein the sending module is configured to send third information before sending the first information, wherein the third information indicates whether the M modes comprise the third mode.

64. The apparatus according to claim 63, wherein the third information comprises a first field; and
when a value of the first field is a third value, the third information indicates that the M modes comprise the third mode; or
when a value of the first field is a fourth value, the third information indicates that the M modes do not comprise the third mode.

65. The apparatus according to claim 63, wherein
when the third information comprises a first field, the third information indicates that the M modes comprise the third mode, or when the third information does not comprise a first field, the third information indicates that the M modes do not comprise the third mode; or
when the third information comprises a first field, the third information indicates that the M modes do not comprise the third mode, or when the third information does not comprise a first field, the third information indicates that the M modes comprise the third mode.

66. The apparatus according to claim 64 or 65, wherein the first field is one field in RRC, a MAC CE, or DCI.

67. A communication apparatus, comprising:
a receiving module, configured to receive first information;
a processing module, configured to determine one mode or N modes based on the first information, wherein the one mode is one of M modes, the N modes are N modes of the M modes, N is an integer greater than 1, and M is an integer greater than or equal to N;
the M modes comprise one or more of a first mode, a second mode, and a third mode;
the first mode is sending a transport block via one antenna panel;
the second mode is sending same transport blocks at at least two moments via at least one antenna panel, and the transport block is sent at each of the at least two moments via one antenna panel; and
the third mode is sending a same transport block simultaneously via at least two antenna panels, and different antenna panels send different parts of the transport block, or the third mode is sending one transport block simultaneously via each of at least two antenna panels; and
a sending module, configured to send a transport block in the one mode or one of the N modes.

68. The apparatus according to claim 67, wherein when M=3, and N=2, that the processing module is configured to determine the one mode or N modes based on the first information comprises:
when a value of the first information is a first value, the first information indicates two modes, and the two modes are the first mode and the second mode; or when a value of the first information is a second value, the first information indicates one mode, and the mode is the third mode; or
when a value of the first information is a first value, the first information indicates two modes, and the two modes are the first mode and the second mode; or when a value of the first information is a second value, the first information indicates two modes, and the two modes are the first mode and the third mode; or
when a value of the first information is a first value, the first information indicates two modes, and the two modes are the first mode and the third mode; or when a value of the first information is a second value, the first information indicates one mode, and the mode is the second mode.

69. The apparatus according to claim 67 or 68, wherein when N=2, the receiving module is further configured to:
receive second information, wherein the second information indicates one of the N modes.

70. The apparatus according to claim 69, wherein the second information is at least one bit in radio resource control RRC, a media access control control element MAC CE, or downlink control information DCI.

71. The apparatus according to any one of claims 67 to 70, wherein the first information is one bit in RRC, a MAC CE, or DCI.

72. The apparatus according to claim 67, wherein the processing module is configured to determine the one mode from the M modes based on the first information; and
if a value of the first information belongs to a first value set, the first information indicates that the mode is the first mode, and the first value set comprises at least one value; or
if a value of the first information belongs to a second value set, the first information indicates that the mode is the second mode, and the second value set comprises at least one value; or
if a value of the first information belongs to a third value set, the first information indicates that the mode is the third mode, and the third value set comprises at least one value.

73. The apparatus according to claim 71, wherein the first information is at least two bits in RRC, a MAC CE, or DCI.

74. The apparatus according to any one of claims 67 to 73, wherein the receiving module is further configured to receive third information before receiving the first information, and the third information indicates whether the M modes comprise the third mode.

75. The apparatus according to claim 74, wherein the third information comprises a first field; and
when a value of the first field is a third value, the third information indicates that the M modes comprise the third mode; or
when a value of the first field is a fourth value, the third information indicates that the M modes do not comprise the third mode.

76. The apparatus according to claim 74, wherein
when the third information comprises a first field, the third information indicates that the M modes comprise the third mode, or when the third information does not comprise a first field, the third information indicates that the M modes do not comprise the third mode; or
when the third information comprises a first field, the third information indicates that the M modes do not comprise the third mode, or when the third information does not comprise a first field, the third information indicates that the M modes comprise the third mode.

77. The apparatus according to claim 75 or 76, wherein the first field is one field in RRC, a MAC CE, or DCI.

78. A communication apparatus, comprising:
a sending module, configured to send first information, wherein the first information is used to determine one mode or N modes, the one mode is one of M modes, the N modes are N modes of the M modes, N is an integer greater than 1, and M is an integer greater than or equal to N;
the M modes comprise one or more of a first mode, a second mode, and a third mode;
the first mode is sending a transport block via one antenna panel;
the second mode is sending same transport blocks at at least two moments via at least one antenna panel, and the transport block is sent at each of the at least two moments via one antenna panel; and
the third mode is sending a same transport block simultaneously via at least two antenna panels, and different antenna panels send different parts of the transport block, or the third mode is sending one transport block simultaneously via each of at least two antenna panels; and
a receiving module, configured to receive a transport block in the one mode or one of the N modes.

79. The apparatus according to claim 78, wherein when M=3, and N=2, that the first information is used to determine the one mode or N modes comprises:
when a value of the first information is a first value, the first information indicates two modes, and the two modes are the first mode and the second mode; or when a value of the first information is a second value, the first information indicates one mode, and the mode is the third mode; or
when a value of the first information is a first value, the first information indicates two modes, and the two modes are the first mode and the second mode; or when a value of the first information is a second value, the first information indicates two modes, and the two modes are the first mode and the third mode; or
when a value of the first information is a first value, the first information indicates two modes, and the two modes are the first mode and the third mode; or when a value of the first information is a second value, the first information indicates one mode, and the mode is the second mode.

80. The apparatus according to claim 78 or 79, wherein when N=2, the sending module is further configured to:
send second information, wherein the second information indicates one of the N modes.

81. The apparatus according to claim 80, wherein the second information is at least one bit in radio resource control RRC, a media access control control element MAC CE, or downlink control information DCI.

82. The apparatus according to any one of claims 78 to 81, wherein the first information is one bit in RRC, a MAC CE, or DCI.

83. The apparatus according to claim 78, wherein that the first information is used to determine the one mode from the M modes comprises:
if a value of the first information belongs to a first value set, the first information indicates that the mode is the first mode, and the first value set comprises at least one value; or
if a value of the first information belongs to a second value set, the first information indicates that the mode is the second mode, and the second value set comprises at least one value; or
if a value of the first information belongs to a third value set, the first information indicates that the mode is the third mode, and the third value set comprises at least one value.

84. The apparatus according to claim 83, wherein the first information is at least two bits in RRC, a MAC CE, or DCI.

85. The apparatus according to any one of claims 78 to 84, wherein the sending module is configured to send third information before sending the first information, wherein the third information indicates whether the M modes comprise the third mode.

86. The apparatus according to claim 85, wherein the third information comprises a first field; and
when a value of the first field is a third value, the third information indicates that the M modes comprise the third mode; or
when a value of the first field is a fourth value, the third information indicates that the M modes do not comprise the third mode.

87. The apparatus according to claim 85, wherein
when the third information comprises a first field, the third information indicates that the M modes comprise the third mode, or when the third information does not comprise a first field, the third information indicates that the M modes do not comprise the third mode; or
when the third information comprises a first field, the third information indicates that the M modes do not comprise the third mode, or when the third information does not comprise a first field, the third information indicates that the M modes comprise the third mode.

88. The apparatus according to claim 86 or 87, wherein the first field is one field in RRC, a MAC CE, or DCI.

89. A communication apparatus, comprising a processor, wherein the processor is configured to execute instructions stored in a memory, and when the instructions are executed, the method according to any one of claims 1 to 11 is implemented, or the method according to any one of claims 23 to 33 is implemented.

90. A communication apparatus, comprising a processor, wherein the processor is configured to execute instructions stored in a memory, and when the instructions are executed, the method according to any one of claims 12 to 22 is implemented, or the method according to any one of claims 34 to 44 is implemented.

91. A computer-readable storage medium, wherein the computer-readable storage medium stores a computer program or instructions, and when the computer program or the instructions are executed by a communication apparatus, the method according to any one of claims 1 to 11 or claims 23 to 33 is implemented, or the method according to any one of claims 12 to 22 or claims 34 to 44 is implemented.

92. A computer program product comprising program instructions, wherein when the program instructions are run on a computer, the computer is enabled to perform the method according to any one of claims 1 to 11, or the computer is enabled to perform the method according to any one of claims 23 to 33.

93. A computer program product comprising program instructions, wherein when the program instructions are run on a computer, the computer is enabled to perform the method according to any one of claims 12 to 22, or the computer is enabled to perform the method according to any one of claims 34 to 44.

94. A chip apparatus, comprising a processing circuit, wherein the processing circuit is configured to invoke a program from a memory and run the program, so that a communication device on which the chip apparatus is installed performs the method according to any one of claims 1 to 11 or claims 23 to 33, or performs the method according to any one of claims 12 to 22 or claims 34 to 44.
